# EUROPEAN PATENT SPECIFICATION

(11) **EP 3 468 264 B1**
(45) Date of publication and mention of the grant of the patent: **30.12.2020**
(21) Application number: 17819202.7
(22) Date of filing: 26.06.2017
(51) Int. Cl.: H04W 56/00, H04W 52/14, H04W 52/34, H04W 52/28, H04W 52/30, H04L 5/00

(54) **METHOD AND DEVICE FOR POWER ALLOCATION**
VERFAHREN UND VORRICHTUNG ZUR LEISTUNGSZUWEISUNG
PROCÉDÉ ET DISPOSITIF D'ATTRIBUTION DE PUISSANCE

(30) Priority: 30.06.2016 CN 201610511895
(43) Date of publication of application: 10.04.2019
(73) Proprietor: Huawei Technologies Co., Ltd., Longgang District Shenzhen, Guangdong 518129 (CN)
(72) Inventor: LIU, Jianqin, Shenzhen Guangdong 518129 (CN); QU, Bingyu, Shenzhen Guangdong 518129 (CN); HE, Chuanfeng, Shenzhen Guangdong 518129 (CN)
(74) Representative: Goddar, Heinz J.
(86) International application number: PCT/CN2017/090044
(87) International publication number: WO 2018/001205

(56) References cited:
- WO-A1-2015/156521
- WO-A1-2015/168910
- WO-A1-2016/000241
- CN-A- 103 220 768
- CN-A- 104 081 838
- NTT DOCOMO: "Summary of email discussion [76b-08]", 3GPP DRAFT; R1-142263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789380, Retrieved from the Internet: URL:http://www.3gpp.org/ftp/Meetings_3GPP_ SYNC/RAN1/RAN1/Docs/ [retrieved on 2014-05-18]
- SHARP: "UL power allocation for dual connectivity", 3GPP DRAFT; R1-143124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 17 August 2014 (2014-08-17), XP050788602, Retrieved from the Internet: URL:http://www.3gpp.org/ftp/Meetings_3GPP_ SYNC/RAN1/Docs/ [retrieved on 2014-08-17]
- HUAWEI ET AL: "Power control for CA and DC", 3GPP DRAFT; R1-1706904, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272135, Retrieved from the Internet: URL:http://www.3gpp.org/ftp/Meetings_3GPP_ SYNC/RAN1/Docs/ [retrieved on 2017-05-14]

## Description

### TECHNICAL FIELD

This application relates to the field of communications technologies, and in particular, to a power allocation method and apparatus.

### BACKGROUND

In a current communications system, user equipment (User Experience, UE) may simultaneously access a plurality of cell groups. Different cell groups may have transmission subframes of different time granularities. For ease of description, an example in which the UE simultaneously accesses a first cell group and a second cell group is used for description. The first cell group is corresponding to a first transmission subframe. The second cell group is corresponding to a second transmission subframe. The first transmission subframe and the second transmission subframe have different time granularities. When the UE transmits data to a base station, the UE adds to-be-transmitted data to the first transmission subframe and the second transmission subframe, allocates first transmit power to the first transmission subframe, and allocates second transmit power to the second transmission subframe. The UE transmits, by using the first transmit power, channel information on the first transmission subframe to the base station; and transmits, by using the second transmit power, channel information on the second transmission subframe to the base station.

A first transmission time of the first transmission subframe may overlap with a second transmission time of the second transmission subframe. In this case, the UE determines, from the first transmission subframe and the second transmission subframe based on the first transmission time and the second transmission time, a transmission subframe whose transmission time is earlier and a transmission subframe whose transmission time is later; and preferentially allocates transmit power to the transmission subframe whose transmission time is earlier. On the transmission subframe whose transmission time is later, the UE can use only reserved transmit power.

The prior art has at least the following problem:
If a time granularity of a transmission subframe whose transmission time is earlier is less than a time granularity of a transmission subframe whose transmission time is later, one transmission subframe whose transmission time is later is corresponding to a plurality of transmission subframes whose transmission times are earlier. When there is not always to-be-transmitted data on the plurality of transmission subframes whose transmission times are earlier, idle transmit power on the transmission subframes whose transmission times are earlier cannot be re-allocated to the transmission subframe whose transmission time is later, thereby causing waste of power resources and low power utilization.

NTT DOCOMO: "Summary of email discussion [76b-08]", 3GPP DRAFT; R1-142263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20140519 - 20140523 18 May 2014 Retrieved from the Internet: URL:http://www.3gpp.org/ftp/Meetings_3GPP_SYNC/RANl/RANl/Docs/ [retrieved on 2014-05-18] discloses a discussion of the specification impact for the introduction of dual connectivity.

SHARP: "UL power allocation for dual Connectivity", 3GPP DRAFT; R1-143124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20140818 - 20140822 17 August 2014, Retrieved from the Internet: URL:http://www.3gpp.org/ftp/Meetings_3GPP_SYNC/RANl/Docs/ [retrieved on 2014-08-17] discusses the remaining power allocation, especially the details of the prioritization rule and whether/how two types of UE behaviors are applied.

### SUMMARY

To resolve the prior-art problem, this disclosure provides a power allocation method and apparatus. Technical solutions are as follows:
According to a first aspect, an embodiment of this disclosure provides a power allocation method. The method includes:
determining, by user equipment UE, a first start time point of a first control subframe and a second start time point of a second control subframe, where the first control subframe is used to transmit control information of a first target subframe, the second control subframe is used to transmit control information of a second target subframe, a transmission time of the second target subframe overlaps with a transmission time of the first target subframe, the second target subframe and the first target subframe have different subframe lengths, and the second target subframe and the first target subframe belong to different base stations or different cell groups;
determining, by the UE based on the first start time point and the second start time point, whether a priority of the first target subframe is higher than a priority of the second target subframe, and determining first uplink channel information on the first target subframe and second uplink channel information on the second target subframe; and
if the priority of the first target subframe is higher than the priority of the second target subframe, allocating, by the UE based on the first uplink channel information and the second uplink channel information, power to the UE in a base station or a cell group in which the first target subframe is located, and allocating reserved power of the UE to the UE in a base station or a cell group in which the second target subframe is located; or
if the priority of the first target subframe is lower than the priority of the second target subframe, allocating, by the UE based on the first uplink channel information and the second uplink channel information, power to the UE in a base station or a cell group in which the second target subframe is located, and allocating reserved power of the UE to the UE in a base station or a cell group in which the first target subframe is located.

In this embodiment of this disclosure, it is determined, based on the first start time point of the first control subframe and the second start time point of the second control subframe, whether the priority of the first target subframe is higher than the priority of the second target subframe. Because a start time point of a control subframe of a target subframe that has a lower frequency may be earlier than a start time point of a control subframe of a target subframe that has a higher frequency, it can be determined that a priority of the target subframe that has a lower frequency is higher than a priority of the target subframe that has a higher frequency, and power is preferentially allocated to the UE in a base station or a cell group in which the target subframe that has a lower frequency is located. This avoids a problem that possibly idle transmit power on a target subframe whose transmission time is earlier cannot be re-allocated to a target subframe whose transmission time is later, and improves power utilization.

In a possible design, the determining, by the UE based on the first start time point and the second start time point, whether a priority of the first target subframe is higher than a priority of the second target subframe includes:
if the first start time point is earlier than the second start time point, determining, by the UE, that the priority of the first target subframe is higher than the priority of the second target subframe; or
if the second start time point is earlier than the first start time point, determining, by the UE, that the priority of the first target subframe is lower than the priority of the second target subframe.

In this embodiment of this disclosure, it is determined that a priority of a target subframe of a control subframe whose start time point is earlier is higher than a priority of a target subframe of a control subframe whose start time point is later. Therefore, it can be determined that a priority of a target subframe that has a lower frequency is higher than a priority of a target subframe that has a higher frequency. This avoids a problem that possibly idle transmit power on a target subframe whose transmission time is earlier cannot be re-allocated to a target subframe whose transmission time is later, and improves power utilization.

In another possible design, the determining, by the UE based on the first start time point and the second start time point, whether a priority of the first target subframe is higher than a priority of the second target subframe includes:
calculating, by the UE, a time difference between the first start time point and the second start time point; and
determining, by the UE based on the time difference and a time difference threshold, whether the priority of the first target subframe is higher than the priority of the second target subframe.

In this embodiment of this disclosure, the time difference threshold is set, and it is determined, based on the time difference between the first start time point and the second start time point and the time difference threshold, whether the priority of the first target subframe is higher than the priority of the second target subframe, so that a power allocation priority of the UE can be flexibly configured in different scenarios, and power utilization is maximally improved.

In another possible design, the determining, by the UE based on the time difference and a time difference threshold, whether the priority of the first target subframe is higher than the priority of the second target subframe includes:
if the time difference is greater than the time difference threshold, determining, by the UE, that the priority of the first target subframe is higher than the priority of the second target subframe; or
if the time difference is not greater than the time difference threshold, determining, by the UE, that the priority of the first target subframe is lower than the priority of the second target subframe.

In another possible design, the determining, by UE, a first start time point of a first control subframe and a second start time point of a second control subframe includes:
obtaining, by the UE, a first time offset of the first control subframe and a second time offset of the second control subframe; and
determining, by the UE, the first start time point of the first control subframe and the second start time point of the second control subframe based on the first time offset and the second time offset.

In this embodiment of this disclosure, the first start time point of the first control subframe and the second start time point of the second control subframe are determined based on the first time offset and the second time offset, so that a power allocation priority of the UE can be flexibly configured in different scenarios, and power utilization is maximally improved.

In another possible design, the allocating, by the UE based on the first uplink channel information and the second uplink channel information, power to the UE in a base station or a cell group in which the first target subframe is located includes:
when an uplink channel of the first target subframe includes a random access channel PRACH, calculating, by the UE, first guaranteed power of the uplink channel of the first target subframe based on the first uplink channel information and the second uplink channel information, where the first guaranteed power is power configured, by using higher layer signaling, for the UE in the base station or the cell group in which the first target subframe is located; and
allocating, by the UE based on the first guaranteed power and first required power of the uplink channel of the first target subframe, the power to the UE in the base station or the cell group in which the first target subframe is located.

In this embodiment of this disclosure, if the priority of the first target subframe is higher than the priority of the second target subframe, the power is allocated, based on the first guaranteed power and the first required power, to the UE in the base station or the cell group in which the first target subframe is located, so that a power requirement of allocating the power to the UE in the base station or the cell group in which the first target subframe is located can be met.

In another possible design, the calculating, by the UE, first guaranteed power of the uplink channel of the first target subframe based on the first uplink channel information and the second uplink channel information includes:
calculating, by the UE, the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

In this embodiment of this disclosure, if the priority of the first target subframe is higher than the priority of the second target subframe, the first guaranteed power of the uplink channel of the first target subframe is calculated based on the first uplink channel information and the second uplink channel information, so that a power requirement of allocating the power to the UE in the base station or the cell group in which the first target subframe is located can be met.

According to a second aspect, an embodiment of this disclosure provides a power allocation apparatus. The apparatus includes:
a first determining module, configured to determine a first start time point of a first control subframe and a second start time point of a second control subframe, where the first control subframe is used to transmit control information of a first target subframe, the second control subframe is used to transmit control information of a second target subframe, a transmission time of the second target subframe overlaps with a transmission time of the first target subframe, the second target subframe and the first target subframe have different subframe lengths, and the second target subframe and the first target subframe belong to different base stations or different cell groups;
a second determining module, configured to: determine, based on the first start time point and the second start time point, whether a priority of the first target subframe is higher than a priority of the second target subframe, and determine first uplink channel information on the first target subframe and second uplink channel information on the second target subframe;
a first allocation module, configured to: if the priority of the first target subframe is higher than the priority of the second target subframe, allocate, based on the first uplink channel information and the second uplink channel information, power to the UE in a base station or a cell group in which the first target subframe is located, and allocate reserved power of the UE to the UE in a base station or a cell group in which the second target subframe is located; and
a second allocation module, configured to: if the priority of the first target subframe is lower than the priority of the second target subframe, allocate, based on the first uplink channel information and the second uplink channel information, power to the UE in a base station or a cell group in which the second target subframe is located, and allocate reserved power of the UE to the UE in a base station or a cell group in which the first target subframe is located.

In a possible design, the second determining module is further configured to: if the first start time point is earlier than the second start time point, determine that the priority of the first target subframe is higher than the priority of the second target subframe; or
the second determining module is further configured to: if the second start time point is earlier than the first start time point, determine that the priority of the first target subframe is lower than the priority of the second target subframe.

In another possible design, the second determining module is further configured to: calculate a time difference between the first start time point and the second start time point, and determine, based on the time difference and a time difference threshold, whether the priority of the first target subframe is higher than the priority of the second target subframe.

In another possible design, the second determining module is further configured to: if the time difference is greater than the time difference threshold, determine that the priority of the first target subframe is higher than the priority of the second target subframe; or
the second determining module is further configured to: if the time difference is not greater than the time difference threshold, determine that the priority of the first target subframe is lower than the priority of the second target subframe.

In another possible design, the first determining module is further configured to: obtain a first time offset of the first control subframe and a second time offset of the second control subframe, and determine the first start time point of the first control subframe and the second start time point of the second control subframe based on the first time offset and the second time offset.

In another possible design, the first allocation module is further configured to: when an uplink channel of the first target subframe includes a random access channel PRACH, calculate first guaranteed power of the uplink channel of the first target subframe based on the first uplink channel information and the second uplink channel information, where the first guaranteed power is power configured, by using higher layer signaling, for the UE in the base station or the cell group in which the first target subframe is located; and allocate, based on the first guaranteed power and first required power of the uplink channel of the first target subframe, the power to the UE in the base station or the cell group in which the first target subframe is located.

In another possible design, the first allocation module is further configured to calculate the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

According to a third aspect, an embodiment of this disclosure provides a computer storage medium. The computer storage medium stores a computer program, and the computer program implements the method in the first aspect or any possible implementation of the first aspect when executed by a processor.

In the embodiments of this disclosure, it is determined, based on the first start time point of the first control subframe and the second start time point of the second control subframe, whether the priority of the first target subframe is higher than the priority of the second target subframe. Because a start time point of a control subframe of a target subframe that has a lower frequency may be earlier than a start time point of a control subframe of a target subframe that has a higher frequency, it can be determined that a priority of the target subframe that has a lower frequency is higher than a priority of the target subframe that has a higher frequency, and power is preferentially allocated to the UE in a base station or a cell group in which the target subframe that has a lower frequency is located. This avoids a problem that possibly idle transmit power on a target subframe whose transmission time is earlier cannot be re-allocated to a target subframe whose transmission time is later, and improves power utilization.

### BRIEF DESCRIPTION OF DRAWINGS

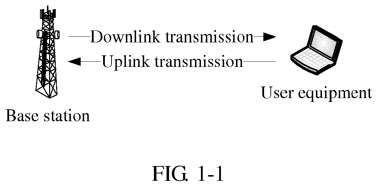

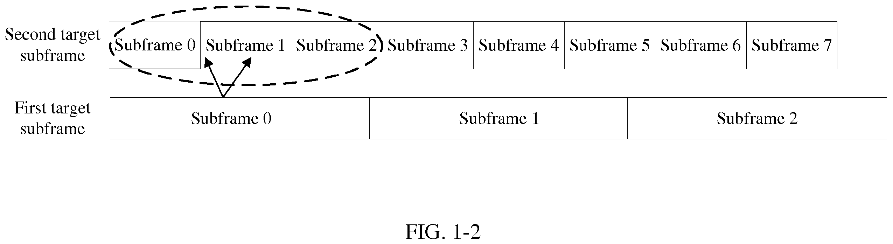

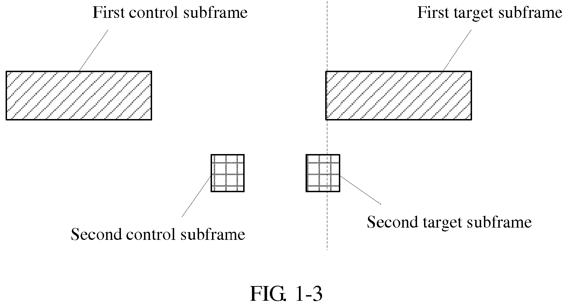

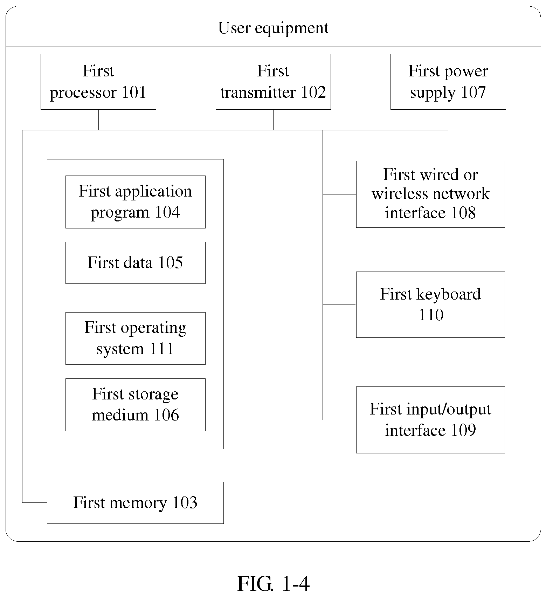

FIG. 1-1 is a schematic diagram of a communications system according to an embodiment of this disclosure;
FIG. 1-2 is a schematic diagram of a first target subframe and a second target subframe according to an embodiment of this disclosure;
FIG. 1-3 is a schematic diagram of a relationship between a target subframe and a control subframe according to an embodiment of this disclosure;
FIG. 1-4 is a schematic structural diagram of user equipment according to an embodiment of this disclosure;
FIG. 2 is a schematic structural diagram of a base station according to an embodiment of this disclosure;
FIG. 3-1 is a flowchart of a power allocation method according to an embodiment of this disclosure;
FIG. 3-2 is a schematic diagram of a relationship between a target subframe and a control subframe according to an embodiment of this disclosure;
FIG. 4-1 is a flowchart of a power allocation method according to a competitive example;
FIG. 4-2 is a schematic diagram of a start time point of a control subframe according to an embodiment of this disclosure;
FIG. 5 is a schematic structural diagram of a power allocation apparatus according to an embodiment of this disclosure; and
FIG. 6 is a schematic structural diagram of a power allocation apparatus according to a competitive example.

### DESCRIPTION OF EMBODIMENTS

To make the objectives, technical solutions, and advantages of this disclosure clearer, the following further describes the implementations of this disclosure in detail with reference to the accompanying drawings. In the following description, embodiments not falling under the scope of the claims are provided only as competitive examples.

In a current communications system, such as a Long Term Evolution (Long Term Evolution, LTE) communications system or a Wideband Code Division Multiple Access (Wideband Code Division Multiple Access, WCDMA) communications system, the communications system includes a base station and UE, as shown in FIG. 1-1. The UE simultaneously performs uplink data transmission on a first target subframe and a second target subframe that have different subframe lengths. A frequency of the first target subframe is different from a frequency of the second target subframe.

For example, referring to FIG. 1-2, a subframe length of the first target subframe is greater than a subframe length of the second target subframe, the frequency of the first target subframe is lower than the frequency of the second target subframe, and one first target subframe is corresponding to a plurality of second target subframes. Therefore, there may be a case in which uplink control information of the UE on the first target subframe arrives first, although uplink data of the UE transmitted on the first target subframe is transmitted after uplink data of the UE transmitted on the second target subframe (control information is usually transmitted in the first four subframes of a target subframe). As shown in FIG. 1-3, a first control subframe is used to transmit control information of the first target subframe, and a second control subframe is used to transmit control information of the second target subframe. A first start time point of the first control subframe is earlier than a second start time point. The UE determines that a priority of the first target subframe is higher than a priority of the second target subframe. The UE preferentially allocates power to the UE in a base station or a cell group in which the first target subframe is located, and allocates reserved power of the UE in a base station or a cell group in which the second target subframe is located, so that power is preferentially allocated to a low-frequency subframe. This avoids a case in which transmit power on a high-frequency subframe on which no data transmission is performed cannot be re-allocated for data transmission on a low-frequency subframe because there is not always data transmission on the high-frequency subframe.

Referring to FIG. 1-4, FIG. 1-4 is a structural block diagram of UE according to an embodiment of this disclosure. The UE may vary greatly due to different configurations or performance, and may include one or more first processors 101 and a first transmitter 102.

The first processor 101 is configured to determine a first start time point of a first control subframe and a second start time point of a second control subframe. The first control subframe is used to transmit control information of a first target subframe. The second control subframe is used to transmit control information of a second target subframe. A transmission time of the second target subframe overlaps with a transmission time of the first target subframe. The second target subframe and the first target subframe have different subframe lengths. The second target subframe and the first target subframe belong to different base stations or different cell groups.

The first processor 101 further determines, based on the first start time point and the second start time point, whether a priority of the first target subframe is higher than a priority of the second target subframe, and determines first uplink channel information on the first target subframe and second uplink channel information on the second target subframe.

The first transmitter 102 is configured to: if the priority of the first target subframe is higher than the priority of the second target subframe, allocate, based on the first uplink channel information and the second uplink channel information, power to the UE in a base station or a cell group in which the first target subframe is located, and allocate reserved power of the UE to the UE in a base station or a cell group in which the second target subframe is located.

The first transmitter 102 is further configured to: if the priority of the first target subframe is lower than the priority of the second target subframe, allocate, based on the first uplink channel information and the second uplink channel information, power to the UE in a base station or a cell group in which the second target subframe is located, and allocate reserved power of the UE to the UE in a base station or a cell group in which the first target subframe is located.

Optionally, in addition to the first processor 101 and the first transmitter 102, the UE may further include other components. For example, the UE may further include a first memory 103, and one or more first storage media 106 (for example, one or more mass storage devices) that store a first application program 104 or first data 105. The first memory 103 and the first storage medium 106 may be transient storages or persistent storages. A program stored in the first storage medium 106 may include one or more modules (not shown in the figure), and each module may include a series of instruction operations in a power allocation apparatus. Further, the first processor 101 may be configured to communicate with the first storage medium 106, and perform, on the UE, a series of instruction operations in the first storage medium 106.

The UE may further include one or more first power supplies 107, one or more first wired or wireless network interfaces 108, one or more first input/output interfaces 109, one or more first keyboards 110, and/or one or more first operating systems 111, such as Windows ServerTM, Mac OS XTM, UnixTM, LinuxTM, and FreeBSDTM.

In this disclosure, the first processor 101 and the first transmitter 102 that are included in the UE may further have the following functions:

The first processor 101 is further configured to: if the first start time point is earlier than the second start time point, determine that the priority of the first target subframe is higher than the priority of the second target subframe; or
the first processor 101 is further configured to: if the second start time point is earlier than the first start time point, determine that the priority of the first target subframe is lower than the priority of the second target subframe.

Optionally, the first processor 101 is further configured to: calculate a time difference between the first start time point and the second start time point, and determine, based on the time difference and a time difference threshold, whether the priority of the first target subframe is higher than the priority of the second target subframe.

Optionally, the first processor 101 is further configured to: if the time difference is greater than the time difference threshold, determine that the priority of the first target subframe is higher than the priority of the second target subframe; or
the first processor 101 is further configured to: if the time difference is not greater than the time difference threshold, determine that the priority of the first target subframe is lower than the priority of the second target subframe.

Optionally, the first processor 101 is further configured to: obtain a first time offset of the first control subframe and a second time offset of the second control subframe, and determine the first start time point of the first control subframe and the second start time point of the second control subframe based on the first time offset and the second time offset.

Optionally, the first transmitter 102 is further configured to: when an uplink channel of the first target subframe includes a random access channel PRACH, calculate first guaranteed power of the uplink channel of the first target subframe based on the first uplink channel information and the second uplink channel information, where the first guaranteed power is power configured, by using higher layer signaling, for the UE in the base station or the cell group in which the first target subframe is located; and allocate, based on the first guaranteed power and first required power of the uplink channel of the first target subframe, the power to the UE in the base station or the cell group in which the first target subframe is located.

Optionally, the first transmitter 102 is further configured to calculate the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

Optionally, the reserved power allocated to the UE in the base station or the cell group in which the second target subframe is located is less than or equal to the first guaranteed power, and is less than or equal to a difference between maximum transmit power of the UE and the power allocated to the UE in the base station or the cell group in which the first target subframe is located.

Optionally, the first transmitter 102 is further configured to: when an uplink channel of the second target subframe includes a random access channel PRACH, calculate, by the UE, second guaranteed power of the uplink channel of the second target subframe based on the first uplink channel information and the second uplink channel information, where the second guaranteed power is power configured, by using higher layer signaling, for the UE in the base station or the cell group in which the second target subframe is located; and allocate, based on the second guaranteed power and second required power of the uplink channel of the second target subframe, the power to the UE in the base station or the cell group in which the second target subframe is located.

Optionally, the first transmitter 102 is further configured to calculate the guaranteed power of the uplink channel of the second target subframe based on a reserved power factor of uplink data transmission in the base station or the cell group in which the first target subframe is located, transmit power of a data channel and a PRACH of the first target subframe, transmit power of the PRACH of the second target subframe, and maximum transmit power at a time point at which the transmission time of the first target subframe overlaps with the transmission time of the second target subframe.

Optionally, the reserved power allocated to the UE in the base station or the cell group in which the first target subframe is located is less than or equal to the second guaranteed power, and is less than or equal to a difference between maximum transmit power of the UE and the power allocated to the UE in the base station or the cell group in which the second target subframe is located.

In this embodiment of this disclosure, it is determined, based on the first start time point of the first control subframe and the second start time point of the second control subframe, whether the priority of the first target subframe is higher than the priority of the second target subframe. Because a start time point of a control subframe of a target subframe that has a lower frequency may be earlier than a start time point of a control subframe of a target subframe that has a higher frequency, it can be determined that a priority of the target subframe that has a lower frequency is higher than a priority of the target subframe that has a higher frequency, and power is preferentially allocated to the UE in a base station or a cell group in which the target subframe that has a lower frequency is located. This avoids a problem that possibly idle transmit power on a target subframe whose transmission time is earlier cannot be re-allocated to a target subframe whose transmission time is later, and improves power utilization.

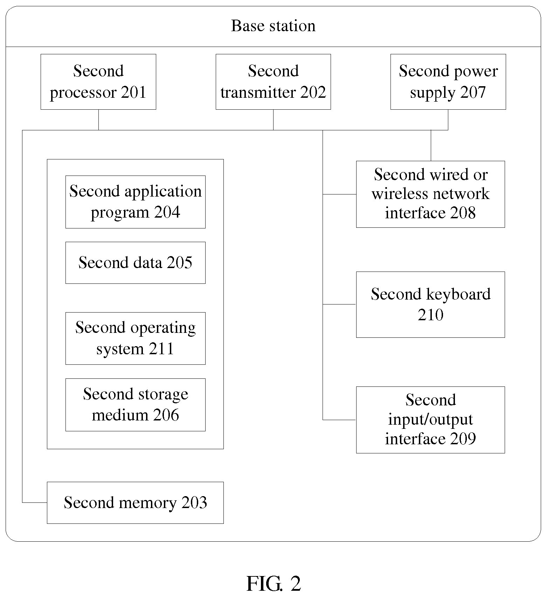

Referring to FIG. 2, FIG. 2 is a structural block diagram of a base station according to an embodiment of this disclosure. The base station may vary greatly due to different configurations or performance, and may include one or more second processors 201 and a second transmitter 202.

The second processor 201 is configured to obtain first uplink channel information on a first target subframe and second uplink channel information on a second target subframe. A transmission time of the second target subframe overlaps with a transmission time of the first target subframe. The second target subframe and the first target subframe have different subframe lengths. The second target subframe and the first target subframe belong to different base stations or different cell groups.

The second processor 201 is further configured to determine a first time offset of a first control subframe and a second time offset of a second control subframe based on the first uplink channel information and the second uplink channel information. The first control subframe is used to transmit control information of the first target subframe. The second control subframe is used to transmit control information of the second target subframe.

The second transmitter 202 is configured to send the first time offset and the second time offset to user equipment UE. The UE determines a first start time point of the first control subframe and a second start time point of the second control subframe based on the first time offset and the second time offset, allocates, based on the first start time point and the second start time point, power to the UE in a base station or a cell group in which the first target subframe is located, and allocates power to the UE in a base station or a cell group in which the second target subframe is located.

Optionally, in addition to the second processor 201 and the second transmitter 202, the base station may further include other components. For example, the base station may further include a second memory 203, and one or more second storage media 206 (for example, one or more mass storage devices) that store a second application program 204 or second data 205. The second memory 203 and the second storage medium 206 may be transient storages or persistent storages. A program stored in the second storage medium 206 may include one or more modules (not shown in the figure), and each module may include a series of instruction operations in a power allocation apparatus. Further, the second processor 201 may be configured to communicate with the second storage medium 206, and perform, on the UE, a series of instruction operations in the second storage medium 206.

The UE may further include one or more second power supplies 207, one or more second wired or wireless network interfaces 208, one or more second input/output interfaces 209, one or more second keyboards 210, and/or one or more second operating systems 211, such as Windows ServerTM, Mac OS XTM, UnixTM, LinuxTM, and FreeBSDTM.

In this disclosure, the second processor 201 and the second transmitter 202 that are included in the UE may further have the following functions:

The second processor 201 is further configured to determine, based on the first uplink channel information and the second uplink channel information, whether a priority of the first target subframe is higher than a priority of the second target subframe; and
the second processor 201 is further configured to: if the priority of the first target subframe is higher than the priority of the second target subframe, determine the first time offset of the first control subframe and the second time offset of the second control subframe, where the first time offset and the second time offset meet a first preset condition, and the first preset condition is that the first start time point of the first control subframe is earlier than the second start time point of the second control subframe, or a time difference between the first start time point of the first control subframe and the second start time point of the second control subframe is greater than a time difference threshold; or
the second processor 201 is further configured to: if the priority of the first target subframe is lower than the priority of the second target subframe, determine the first time offset of the first control subframe and the second time offset of the second control subframe, where the first time offset and the second time offset meet a second preset condition, and the second preset condition is that the second start time point of the second control subframe is earlier than the first start time point of the first control subframe, or a time difference between the first start time point of the first control subframe and the second start time point of the second control subframe is not greater than a time difference threshold.

Further, the first processor 101 or the second processor 201 in the foregoing embodiments may be a central processing unit (CPU), a general purpose processor, a digital signal processor (DSP), an application-specific integrated circuit (ASIC), a field programmable gate array (FPGA) or another programmable logic device, a transistor logic device, a hardware device, or any combination thereof. The first processor 101 or the second processor 201 may implement or execute the logical block diagrams, modules, and circuits of the examples described in combination with the content disclosed in this disclosure. The first processor 101 or the second processor 201 may also be a combination that implements a computing function. For example, the first processor 101 or the second processor 201 includes a combination of one or more microprocessors, or a combination of a DSP and a microprocessor.

Steps of methods or algorithms described in combination with the content of this disclosure may be implemented by hardware, or may be implemented by the first processor 101 or the second processor 201 executing a software instruction. The software instruction may include a corresponding software module. The software module may be stored in a RAM, a flash memory, a ROM, an EPROM, an EEPROM, a register, a hard disk, a removable hard disk, a CD-ROM, or any other form of computer storage medium that is well known in the art. An example computer storage medium is coupled to the first processor 101 or the second processor 201, so that the first processor 101 or the second processor 201 can read information from the computer storage medium, and can write information into the computer storage medium. Certainly, a computer storage medium may alternatively be a part of the first processor 101 or the second processor 201. The first processor 101 or the second processor 201, and the computer storage medium may be located in an ASIC. In addition, the ASIC may be located in a terminal. Certainly, the first processor 101 or the second processor 201, and the computer storage medium may alternatively exist in a terminal as discrete components.

In this embodiment of this disclosure, the base station configures the first time offset and the second time offset for the UE, and the UE determines the first start time point of the first control subframe and the second start time point of the second control subframe based on the first time offset and the second time offset, so that a power allocation priority of the UE can be flexibly configured in different scenarios, and power utilization is maximally improved.

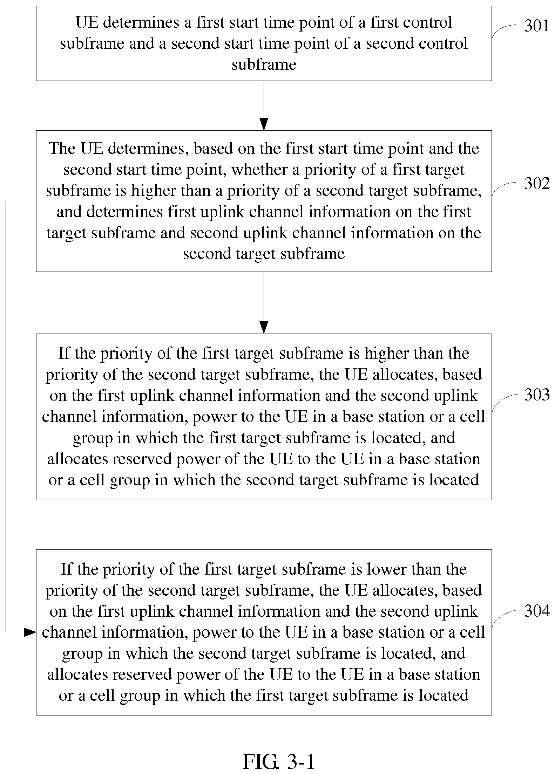

An embodiment of this disclosure provides a power allocation method. The method is applied to UE. Referring to FIG. 3-1, the method includes the following steps.

Step 301: The UE determines a first start time point of a first control subframe and a second start time point of a second control subframe.

In a current communications system, the UE simultaneously accesses different base stations or different cell groups. Before the UE transmits data to a base station, the UE obtains transmission subframes, which are referred to as a first target subframe and a second target subframe, corresponding to different base stations; or the UE obtains transmission subframes, which are referred to as a first target subframe and a second target subframe, corresponding to different cell groups.

A transmission time of the second target subframe overlaps with a transmission time of the first target subframe. The second target subframe and the first target subframe have different subframe lengths. The second target subframe and the first target subframe belong to different base stations or different cell groups.

Because the first target subframe and the second target subframe each have a specific subframe length, the transmission time of the first target subframe and the transmission time of the second target subframe each are a continuous time range. For ease of description, a transmission time range of the first target subframe is referred to as a first transmission time range, and a transmission time range of the second target subframe is referred to as a second transmission time range. The first transmission time range overlaps with the second transmission time range. In other words, the transmission time of the second target subframe overlaps with the transmission time of the first target subframe.

The first control subframe is used to transmit control information of the first target subframe. The second control subframe is used to transmit control information of the second target subframe.

The step of determining, by the UE, a first start time point of a first control subframe and a second start time point of a second control subframe may be:
obtaining, by the UE, a third start time point of the first target subframe, a fourth start time point of the second target subframe, a first subframe length of the first target subframe, and a second subframe length of the second target subframe, determining the first start time point of the first control subframe based on the third start time point and the first subframe length, and determining the second start time point of the second control subframe based on the fourth start time point and the second subframe length.

A start time point of a control subframe is usually earlier than a start time point of a target subframe by a preset quantity of subframe lengths, and the preset quantity may be 4 or the like. Therefore, the step of determining, by the UE, the first start time point of the first control subframe based on the third start time point and the first subframe length may be:
determining, by the UE based on the third start time point and the first subframe length, a first time point that is earlier than the third start time point by a preset quantity of first subframe lengths, and determining the first time point as the first start time point of the first control subframe.

Correspondingly, the step of determining, by the UE, the second start time point of the second control subframe based on the fourth start time point and the second subframe length may be:
determining, by the UE based on the fourth start time point and the second subframe length, a second time point that is earlier than the fourth start time point by a preset quantity of second subframe lengths, and determining the second time point as the second start time point of the second control subframe.

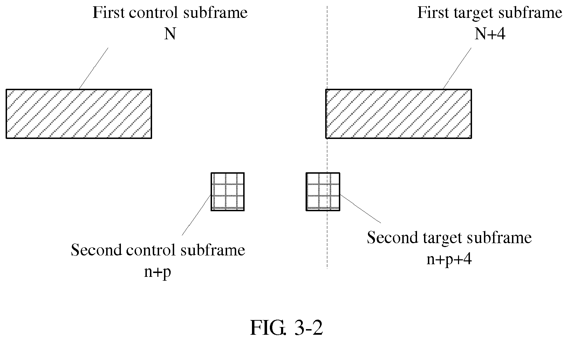

For example, the preset quantity is 4. Referring to FIG. 3-2, a sequence number of the second target subframe is n+p+4, a sequence number of the second control subframe is n+p, a sequence number of the first target subframe is N+4, and a sequence number of the first control subframe is N.

Step 302: The UE determines, based on the first start time point and the second start time point, whether a priority of a first target subframe is higher than a priority of a second target subframe, and determines first uplink channel information on the first target subframe and second uplink channel information on the second target subframe.

In this step, the UE may directly determine, depending on which of the first start time point and the second start time point is earlier, whether the priority of the first target subframe is higher than the priority of the second target subframe. This is the following first implementation. In this step, to adapt to different requirements of different scenarios, a time difference threshold may be set. The UE determines, based on a time difference between the first start time point and the second start time point and the time difference threshold, whether the priority of the first target subframe is higher than the priority of the second target subframe. This is the following second implementation.

In the first implementation, this step may be:
if the first start time point is earlier than the second start time point, determining, by the UE, that the priority of the first target subframe is higher than the priority of the second target subframe; or if the second start time point is earlier than the first start time point, determining, by the UE, that the priority of the first target subframe is lower than the priority of the second target subframe.

In the second implementation, this step may be:
calculating, by the UE, the time difference between the first start time point and the second start time point, and determining, based on the time difference and the time difference threshold, whether the priority of the first target subframe is higher than the priority of the second target subframe; and
if the time difference is greater than the time difference threshold, determining, by the UE, that the priority of the first target subframe is higher than the priority of the second target subframe; or if the time difference is not greater than the time difference threshold, determining, by the UE, that the priority of the first target subframe is lower than the priority of the second target subframe.

The time difference threshold may be set and changed depending on a requirement. In this embodiment of this disclosure, the time difference threshold is not specifically limited. For example, the time difference threshold may be 3 ms.

In this step, alternatively, the UE may directly determine, based on a frequency of the first target subframe and a frequency of the second target subframe, whether the priority of the first target subframe is higher than the priority of the second target subframe. A specific process may be:
if the frequency of the first target subframe is higher than the frequency of the second target subframe, determining, by the UE, that the priority of the first target subframe is lower than the priority of the second target subframe; or if the frequency of the first target subframe is lower than the frequency of the second target subframe, determining, by the UE, that the priority of the first target subframe is higher than the priority of the second target subframe.

The UE stores the first uplink channel information and the second uplink channel information. In this step, the UE directly obtains the first uplink channel information and the second uplink channel information that have been stored. Uplink channel information includes a reserved power factor, maximum transmit power at a time point at which transmission times of target subframes overlap, transmit power of a data channel, and transmit power of a random access channel.

Step 303: If the priority of the first target subframe is higher than the priority of the second target subframe, the UE allocates, based on the first uplink channel information and the second uplink channel information, power to the UE in a base station or a cell group in which the first target subframe is located, and allocates reserved power of the UE to the UE in a base station or a cell group in which the second target subframe is located.

If the priority of the first target subframe is higher than the priority of the second target subframe, the UE preferentially allocates the power to the UE in the base station or the cell group in which the first target subframe is located, and the UE can use, in the base station or the cell group in which the second target subframe is located, only the reserved power available after the power is allocated to the base station or the cell group in which the first target subframe is located. This may be specifically implemented by using the following steps (1) to (3), including:
(1): When an uplink channel of the first target subframe includes a random access channel (Physical Random Access Channel, PRACH), the UE calculates first guaranteed power of the uplink channel of the first target subframe based on the first uplink channel information and the second uplink channel information.
   The first guaranteed power is power configured, by using higher layer signaling, for the UE in the base station or the cell group in which the first target subframe is located. Uplink channel information includes a reserved power factor, maximum transmit power at a time point at which transmission times of target subframes overlap, transmit power of a data channel, and transmit power of a random access channel.
   Step (1) may be specifically implemented by using the following step:
   The UE calculates the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe, and by using the following formula (1): ${P}_{b} \left(i1\right) = {\hat{P}}_{CMAX} \left(i1,i2\right) - {\hat{P}}_{PRACH _ CG 2} \left(i1\right) - max \left\{\begin{matrix}{\hat{P}}_{CMAX} \left(i1,i2\right) \cdot \frac{{γ}_{CG 2}}{100} \\ {\hat{P}}_{CG 1}^{1} \left(i2\right) + {\hat{P}}_{PRACH _ CG 1} \left(i2\right)\end{matrix}\right\}$ (1) where P_{b}(i1) is the first guaranteed power of the uplink channel of the first target subframe, il is the first target subframe, i2 is the second target subframe, *γ*_{GG2} is a value of the reserved power factor of the uplink data transmission in the base station or the cell group in which the second target subframe is located, *P̂*_{CMAX}(*i*1,*i*2) is the maximum transmit power at the time point at which the transmission time of the first target subframe overlaps with the transmission time of the second target subframe, ${\hat{P}}_{CG 1}^{1} \left(i2\right) + {\hat{P}}_{PRACH _ CG 1} \left(i2\right)$ is the transmit power of the data channel and the random access channel of the second target subframe, and P̂_{PRACH_CG2}(i1) is the transmit power of the random access memory of the first target subframe.
(2): Allocate, based on the first guaranteed power of the uplink channel of the first target subframe and first required power of the uplink channel of the first target subframe, the power to the UE in the base station or the cell group in which the first target subframe is located.
   Smallest power is selected from the first guaranteed power of the uplink channel of the first target subframe and the first required power of the uplink channel of the first target subframe, and the smallest power is allocated to the UE in the base station or the cell group in which the first target subframe is located.
   Correspondingly, the power allocated to the UE in the base station or the cell group in which the first target subframe is located may be expressed by using the following formula (2): ${\hat{P}}_{CG 2}^{1} \left(i1\right) = min { \begin{matrix}{\hat{P}}_{q 1} \left(i1\right) \\ {\hat{P}}_{CMAX} \left(i1,i2\right) - {\hat{P}}_{PRACH _ CG 2} \left(i1\right) - max { \begin{matrix}{\hat{P}}_{CMAX} \left(i1,i2\right) \cdot \frac{{γ}_{CG 2}}{100} \\ {\hat{P}}_{CG 1}^{1} \left(i2\right) + {\hat{P}}_{PRACH _ CG 1} \left(i2\right)\end{matrix}\end{matrix}$ (2) where P_{q1}(i1) is the first required power of the uplink channel of the first target subframe.
(3): Allocate the reserved power of the UE to the UE in the base station or the cell group in which the second target subframe is located.

The UE obtains the reserved power available after the power is allocated to the UE in the base station or the cell group in which the first target subframe is located, and allocates the reserved power to the UE in the base station or the cell group in which the second target subframe is located.

The reserved power of the UE is allocated to the base station or the cell group in which the second target subframe is located. The reserved power is less than or equal to the first guaranteed power, and is less than or equal to a difference between maximum transmit power of the UE and the power allocated to the UE in the base station or the cell group in which the first target subframe is located.

Step 304: If the priority of the first target subframe is lower than the priority of the second target subframe, the UE allocates, based on the first uplink channel information and the second uplink channel information, power to the UE in a base station or a cell group in which the second target subframe is located, and allocates reserved power of the UE to the UE in a base station or a cell group in which the first target subframe is located.

If the priority of the first target subframe is lower than the priority of the second target subframe, the UE preferentially allocates the power to the UE in the base station or the cell group in which the second target subframe is located, and the UE can use, in the base station or the cell group in which the first target subframe is located, only the reserved power available after the power is allocated to the base station or the cell group in which the second target subframe is located. This may be specifically implemented by using the following steps (1) to (3), including:
(1): When an uplink channel of the second target subframe includes a random access channel PRACH, the UE calculates second guaranteed power of the uplink channel of the second target subframe based on the first uplink channel information and the second uplink channel information.
   The second guaranteed power is power configured, by using higher layer signaling, for the UE in the base station or the cell group in which the second target subframe is located. Uplink channel information includes a reserved power factor, maximum transmit power at a time point at which transmission times of target subframes overlap, transmit power of a data channel, and transmit power of a random access channel.
   Step (1) may be specifically implemented by using the following step:
   The UE calculates the second guaranteed power of the uplink channel of the second target subframe based on a reserved power factor of uplink data transmission in the base station or the cell group in which the first target subframe is located, transmit power of a data channel and a PRACH of the first target subframe, transmit power of the PRACH of the second target subframe, and maximum transmit power at a time point at which the transmission time of the first target subframe overlaps with the transmission time of the second target subframe, and by using the following formula (3): ${P}_{b} \left(i2\right) = {\hat{P}}_{CMAX} \left(i1,i2\right) - {\hat{P}}_{PRACH _ CG 2} \left(i2\right) - max \left\{\begin{matrix}{\hat{P}}_{CMAX} \left(i1,i2\right) \cdot \frac{{γ}_{CG 1}}{100} \\ {\hat{P}}_{CG 1}^{1} \left(i1\right) + {\hat{P}}_{PRACH _ CG 1} \left(i1\right)\end{matrix}\right\}$ (3) where P_{b} (i2) is the second guaranteed power of the uplink channel of the second target subframe, i1 is the first target subframe, i2 is the second target subframe, *γ*_{GG1} is a value of the reserved power factor of the uplink data transmission in the base station or the cell group in which the first target subframe is located, *P̂*_{CMAX}(*i*1,*i*2) is the maximum transmit power at the time point at which the transmission time of the first target subframe overlaps with the transmission time of the second target subframe, ${\hat{P}}_{CG 1}^{1} \left(i1\right) + {\hat{P}}_{PRACH _ CG 1} \left(i1\right)$ is the transmit power of the data channel and the random access channel of the first target subframe, and P̂_{PRACH_CG2}(i2) is the transmit power of the random access memory of the second target subframe.
(2): Allocate, based on the second guaranteed power of the uplink channel of the second target subframe and second required power of the uplink channel of the second target subframe, the power to the UE in the base station or the cell group in which the second target subframe is located.
   Smallest power is selected from the second guaranteed power of the uplink channel of the second target subframe and the second required power of the uplink channel of the second target subframe, and the smallest power is allocated to the UE in the base station or the cell group in which the second target subframe is located.
   Correspondingly, the power allocated to the UE in the base station or the cell group in which the second target subframe is located may be expressed by using the following formula (4): ${\hat{P}}_{CG 2}^{1} \left(i1\right) = min { \begin{matrix}{\hat{P}}_{q 1} \left(i2\right) \\ {\hat{P}}_{CMAX} \left(i1,i2\right) - {\hat{P}}_{PRACH _ CG 2} \left(i2\right) - max { \begin{matrix}{\hat{P}}_{CMAX} \left(i1,i2\right) \cdot \frac{{γ}_{CG 1}}{100} \\ {\hat{P}}_{CG 1}^{1} \left(i1\right) + {\hat{P}}_{PRACH _ CG 1} \left(i1\right)\end{matrix}\end{matrix}$ (4) where P_{q1}(i2) is the second required power of the uplink channel of the second target subframe.
(3): Allocate the reserved power of the UE to the UE in the base station or the cell group in which the first target subframe is located.

The UE obtains the reserved power available after the power is allocated to the UE in the base station or the cell group in which the second target subframe is located, and allocates the reserved power to the UE in the base station or the cell group in which the first target subframe is located.

The reserved power of the UE is allocated to the base station or the cell group in which the first target subframe is located. The reserved power is less than or equal to the second guaranteed power, and is less than or equal to a difference between maximum transmit power of the UE and the power allocated to the UE in the base station or the cell group in which the second target subframe is located.

In this embodiment of this disclosure, it is determined, based on the first start time point of the first control subframe and the second start time point of the second control subframe, whether the priority of the first target subframe is higher than the priority of the second target subframe. Because a start time point of a control subframe of a target subframe that has a lower frequency may be earlier than a start time point of a control subframe of a target subframe that has a higher frequency, it can be determined that a priority of the target subframe that has a lower frequency is higher than a priority of the target subframe that has a higher frequency, and power is preferentially allocated to the UE in a base station or a cell group in which the target subframe that has a lower frequency is located. This avoids a problem that possibly idle transmit power on a target subframe whose transmission time is earlier cannot be re-allocated to a target subframe whose transmission time is later, and improves power utilization.

An example of this disclosure provides a power allocation method. To adapt to different requirements of different scenarios, a base station may configure a first time offset of a first control subframe and a second time offset of a second control subframe. UE determines a first start time point of the first control subframe and a second start time point of the second control subframe based on the first time offset and the second time offset, so as to flexibly configure a power allocation priority of the UE in different scenarios, and maximally improve power utilization.

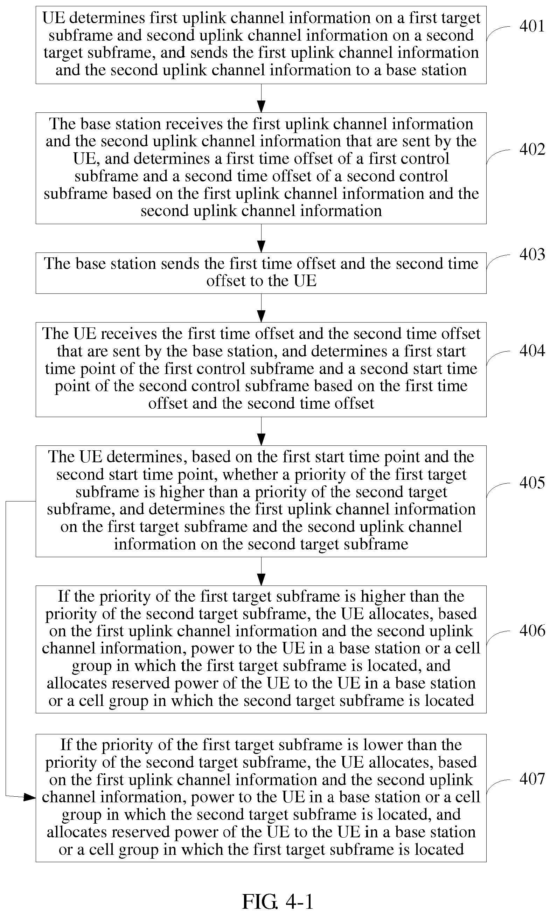

The method is applied between the UE and the base station. Referring to FIG. 4-1, the method includes the following steps.

Step 401: The UE determines first uplink channel information on a first target subframe and second uplink channel information on a second target subframe, and sends the first uplink channel information and the second uplink channel information to the base station.

A transmission time of the second target subframe overlaps with a transmission time of the first target subframe. The second target subframe and the first target subframe have different subframe lengths. The second target subframe and the first target subframe belong to different base stations or different cell groups.

In this example of this disclosure, to adapt to different requirements of different scenarios, the UE sends the first uplink channel information and the second uplink channel information to the base station, and the base station determines a first time offset and a second time offset based on the first uplink channel information and the second uplink channel information.

Step 402: The base station receives the first uplink channel information and the second uplink channel information that are sent by the UE, and determines a first time offset of a first control subframe and a second time offset of a second control subframe based on the first uplink channel information and the second uplink channel information.

The first control subframe is used to transmit control information of the first target subframe. The second control subframe is used to transmit control information of the second target subframe. A time offset is used to change a start time point of a control subframe. To be specific, the first time offset is used to change a first start time point of the first control subframe, and the second time offset is used to change a second start time point of the second control subframe, so as to change a priority relationship between the first target subframe and the second target subframe. This step may be implemented by using the following steps (1) to (3), including:
(1): The base station determines, based on the first uplink channel information and the second uplink channel information, whether a priority of the first target subframe is higher than a priority of the second target subframe.
   Usually, the first time offset and the second time offset that are configured by the base station makes a priority of a low-frequency subframe higher than a priority of a high-frequency subframe. For example, when a frequency of the first target subframe is lower than a frequency of the second target subframe, the first time offset and the second time offset that are configured by the base station makes the priority of the first target subframe higher than the priority of the second target subframe.
   However, when the UE initiates random access on a plurality of high-frequency subframes but the access fails due to limited power, the base station may configure the first time offset and the second time offset, to make priorities of the high-frequency subframes higher than a priority of a low-frequency subframe.
   Therefore, in this step, the base station determines, based on the first uplink channel information and the second uplink channel information, whether there is a target subframe, on which random access is initiated but fails due to limited power, in the first target subframe and the second target subframe. If there is such a target subframe, the base station selects the target subframe, on which the random access is initiated but fails due to the limited power, from the first target subframe and the second target subframe, and determines that a priority of the selected target subframe is higher than a target subframe that is not selected.
   If there is no such a target subframe, the base station obtains a target subframe that has a lower frequency from the first target subframe and the second target subframe, and determines that a priority of the selected target subframe is higher than a target subframe that is not selected.
(2): If the priority of the first target subframe is higher than the priority of the second target subframe, the base station determines the first time offset of the first control subframe and the second time offset of the second control subframe, where the first time offset and the second time offset meet a first preset condition.
   The first preset condition is that the first start time point of the first control subframe is earlier than the second start time point of the second control subframe, or a time difference between the first start time point of the first control subframe and the second start time point of the second control subframe is greater than a time difference threshold.
(3): If the priority of the first target subframe is lower than the priority of the second target subframe, the base station determines the first time offset of the first control subframe and the second time offset of the second control subframe, where the first time offset and the second time offset meet a second preset condition.

The second preset condition is that the second start time point of the second control subframe is earlier than the first start time point of the first control subframe, or a time difference between the first start time point of the first control subframe and the second start time point of the second control subframe is not greater than a time difference threshold.

Step 403: The base station sends the first time offset and the second time offset to the UE.

Step 404: The UE receives the first time offset and the second time offset that are sent by the base station, and determines a first start time point of the first control subframe and a second start time point of the second control subframe based on the first time offset and the second time offset.

The UE obtains a third start time point of the first target subframe, a fourth start time point of the second target subframe, a first subframe length of the first target subframe, and a subframe length of the second target subframe, determines the first start time point of the first control subframe based on the third start time point, the first subframe length, and the first time offset, and determines the second start time point of the second control subframe based on the fourth start time point, the second subframe length, and the second time offset.

A start time point of a control subframe is usually earlier than a start time point of a target subframe by a preset quantity of subframe lengths, and the preset quantity may be 4 or the like. Therefore, the step of determining, by the UE, the first start time point of the first control subframe based on the third start time point, the first subframe length, and the first time offset may be:
determining, by the UE based on the third start time point and the first subframe length, a first time point that is earlier than the third start time point by a preset quantity of first subframe lengths, determining, based on the first time point and the first time offset, a third time point that is earlier than the first time point by the first time offset, and determining the third time point as the first start time point of the first control subframe.

Correspondingly, the step of determining, by the UE, the second start time point of the second control subframe based on the fourth start time point, the second subframe length, and the second time offset may be:
determining, by the UE based on the fourth start time point and the second subframe length, a second time point that is earlier than the fourth start time point by a preset quantity of first subframe lengths, determining, based on the second time point and the second time offset, a fourth time point that is earlier than the second time point by the second time offset, and determining the fourth time point as the second start time point of the second control subframe.

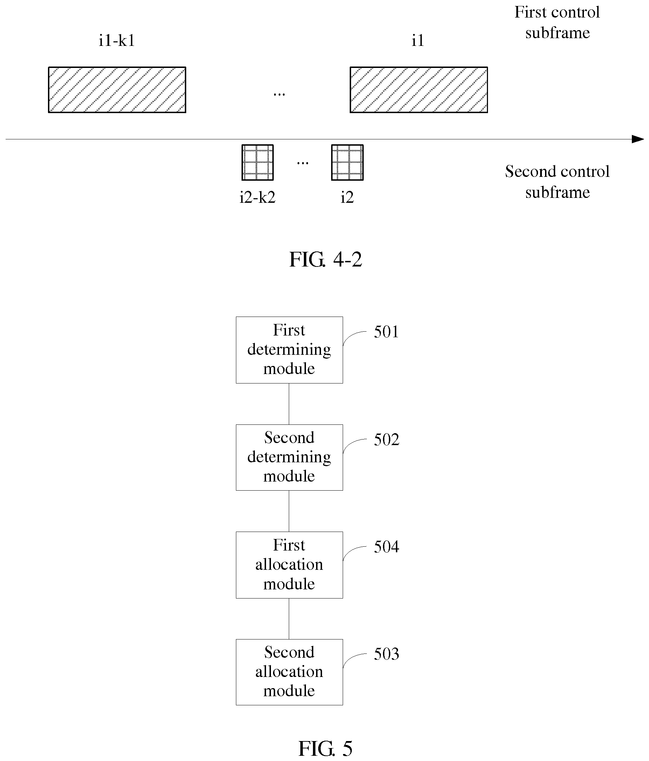

For example, referring to FIG. 4-2, the first control subframe is i1, the first time offset is k1, the first start time point of the first control subframe is i1-k1, the second control subframe is i2, the second time offset is k2, and the second start time point of the second control subframe is i2-k2.

Step 405: The UE determines, based on the first start time point and the second start time point, whether a priority of the first target subframe is higher than a priority of the second target subframe, and determines the first uplink channel information on the first target subframe and the second uplink channel information on the second target subframe.

This step may be implemented in the following first manner or second manner. In the first implementation, this step may be:
if the first start time point is earlier than the second start time point, determining, by the UE, that the priority of the first target subframe is higher than the priority of the second target subframe; or if the second start time point is earlier than the first start time point, determining, by the UE, that the priority of the first target subframe is lower than the priority of the second target subframe.

In the second implementation, this step may be:
calculating, by the UE, the time difference between the first start time point and the second start time point, and determining, based on the time difference and the time difference threshold, whether the priority of the first target subframe is higher than the priority of the second target subframe; and
if the time difference is greater than the time difference threshold, determining, by the UE, that the priority of the first target subframe is higher than the priority of the second target subframe; or if the time difference is not greater than the time difference threshold, determining, by the UE, that the priority of the first target subframe is lower than the priority of the second target subframe.

The time difference threshold may be set and changed depending on a requirement. In this embodiment of this disclosure, the time difference threshold is not specifically limited. For example, the time difference threshold may be 3 ms.

Step 406: If the priority of the first target subframe is higher than the priority of the second target subframe, the UE allocates, based on the first uplink channel information and the second uplink channel information, power to the UE in a base station or a cell group in which the first target subframe is located, and allocates reserved power of the UE to the UE in a base station or a cell group in which the second target subframe is located.

This step is the same as step 303 in the foregoing example. Details are not described herein again.

Step 407: If the priority of the first target subframe is lower than the priority of the second target subframe, the UE allocates, based on the first uplink channel information and the second uplink channel information, power to the UE in a base station or a cell group in which the second target subframe is located, and allocates reserved power of the UE to the UE in a base station or a cell group in which the first target subframe is located.

This step is the same as step 304 in the foregoing example. Details are not described herein again.

In this example of this disclosure, the base station configures the first time offset and the second time offset for the UE, and the UE determines the first start time point of the first control subframe and the second start time point of the second control subframe based on the first time offset and the second time offset, so that a power allocation priority of the UE can be flexibly configured in different scenarios, and power utilization is maximally improved.

An embodiment of this disclosure provides a power allocation apparatus. The apparatus is applied to UE, and is configured to perform the power allocation method in the foregoing embodiment. Referring to FIG. 5, the apparatus includes a first determining module 501, a second determining module 502, a first allocation module 503, and a second allocation module 504.

The first determining module 501 is configured to determine a first start time point of a first control subframe and a second start time point of a second control subframe. The first control subframe is used to transmit control information of a first target subframe. The second control subframe is used to transmit control information of a second target subframe. A transmission time of the second target subframe overlaps with a transmission time of the first target subframe. The second target subframe and the first target subframe have different subframe lengths. The second target subframe and the first target subframe belong to different base stations or different cell groups.

The second determining module 502 is configured to determine, based on the first start time point and the second start time point, whether a priority of the first target subframe is higher than a priority of the second target subframe, and determine first uplink channel information on the first target subframe and second uplink channel information on the second target subframe.

The first allocation module 503 is configured to: if the priority of the first target subframe is higher than the priority of the second target subframe, allocate, based on the first uplink channel information and the second uplink channel information, power to the UE in a base station or a cell group in which the first target subframe is located, and allocate reserved power of the UE to the UE in a base station or a cell group in which the second target subframe is located.

The second allocation module 504 is configured to: if the priority of the first target subframe is lower than the priority of the second target subframe, allocate, based on the first uplink channel information and the second uplink channel information, power to the UE in a base station or a cell group in which the second target subframe is located, and allocate reserved power of the UE to the UE in a base station or a cell group in which the first target subframe is located.

Optionally, the second determining module 502 is further configured to: if the first start time point is earlier than the second start time point, determine that the priority of the first target subframe is higher than the priority of the second target subframe; or
the second determining module 502 is further configured to: if the second start time point is earlier than the first start time point, determine that the priority of the first target subframe is lower than the priority of the second target subframe.

Optionally, the second determining module 502 is further configured to: calculate a time difference between the first start time point and the second start time point, and determine, based on the time difference and a time difference threshold, whether the priority of the first target subframe is higher than the priority of the second target subframe.

Optionally, the second determining module 502 is further configured to: if the time difference is greater than the time difference threshold, determine that the priority of the first target subframe is higher than the priority of the second target subframe; or
the second determining module 502 is further configured to: if the time difference is not greater than the time difference threshold, determine that the priority of the first target subframe is lower than the priority of the second target subframe.

Optionally, the first determining module 501 is further configured to: obtain a first time offset of the first control subframe and a second time offset of the second control subframe, and determine the first start time point of the first control subframe and the second start time point of the second control subframe based on the first time offset and the second time offset.

Optionally, the first allocation module 503 is further configured to: when an uplink channel of the first target subframe includes a random access channel PRACH, calculate first guaranteed power of the uplink channel of the first target subframe based on the first uplink channel information and the second uplink channel information, where the first guaranteed power is power configured, by using higher layer signaling, for the UE in the base station or the cell group in which the first target subframe is located; and allocate, based on the first guaranteed power and first required power of the uplink channel of the first target subframe, the power to the UE in the base station or the cell group in which the first target subframe is located.

Optionally, the first allocation module 503 is further configured to calculate the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

Optionally, the reserved power allocated to the UE in the base station or the cell group in which the second target subframe is located is less than or equal to the first guaranteed power, and is less than or equal to a difference between maximum transmit power of the UE and the power allocated to the UE in the base station or the cell group in which the first target subframe is located.

Optionally, the second allocation module 504 is further configured to: when an uplink channel of the second target subframe includes a random access channel PRACH, calculate second guaranteed power of the uplink channel of the second target subframe based on the first uplink channel information and the second uplink channel information, where the second guaranteed power is power configured, by using higher layer signaling, for the UE in the base station or the cell group in which the second target subframe is located; and allocate, based on the second guaranteed power and second required power of the uplink channel of the second target subframe, the power to the UE in the base station or the cell group in which the second target subframe is located.

Optionally, the second allocation module 504 is further configured to calculate the guaranteed power of the uplink channel of the second target subframe based on a reserved power factor of uplink data transmission in the base station or the cell group in which the first target subframe is located, transmit power of a data channel and a PRACH of the first target subframe, transmit power of the PRACH of the second target subframe, and maximum transmit power at a time point at which the transmission time of the first target subframe overlaps with the transmission time of the second target subframe.

Optionally, the reserved power allocated to the UE in the base station or the cell group in which the first target subframe is located is less than or equal to the second guaranteed power, and is less than or equal to a difference between maximum transmit power of the UE and the power allocated to the UE in the base station or the cell group in which the second target subframe is located.

In this embodiment of this disclosure, it is determined, based on the first start time point of the first control subframe and the second start time point of the second control subframe, whether the priority of the first target subframe is higher than the priority of the second target subframe. Because a start time point of a control subframe of a target subframe that has a lower frequency may be earlier than a start time point of a control subframe of a target subframe that has a higher frequency, it can be determined that a priority of the target subframe that has a lower frequency is higher than a priority of the target subframe that has a higher frequency, and power is preferentially allocated to the UE in a base station or a cell group in which the target subframe that has a lower frequency is located. This avoids a problem that possibly idle transmit power on a target subframe whose transmission time is earlier cannot be re-allocated to a target subframe whose transmission time is later, and improves power utilization.

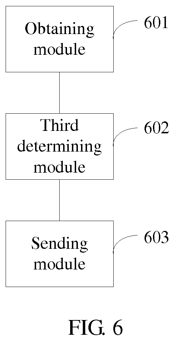

An example of this disclosure provides a power allocation apparatus. The apparatus is applied to a base station, and is configured to perform the power allocation method in the foregoing example. Referring to FIG. 6, the apparatus includes an obtaining module 601, a third determining module 602, and a sending module 603.

The obtaining module 601 is configured to obtain first uplink channel information on a first target subframe and second uplink channel information on a second target subframe. A transmission time of the second target subframe overlaps with a transmission time of the first target subframe. The second target subframe and the first target subframe have different subframe lengths. The second target subframe and the first target subframe belong to different base stations or different cell groups.

The third determining module 602 is configured to determine a first time offset of a first control subframe and a second time offset of a second control subframe based on the first uplink channel information and the second uplink channel information. The first control subframe is used to transmit control information of the first target subframe. The second control subframe is used to transmit control information of the second target subframe.

The sending module 603 is configured to send the first time offset and the second time offset to user equipment UE. The UE determines a first start time point of the first control subframe and a second start time point of the second control subframe based on the first time offset and the second time offset, allocates, based on the first start time point and the second start time point, power to the UE in a base station or a cell group in which the first target subframe is located, and allocates power to the UE in a base station or a cell group in which the second target subframe is located.

Optionally, the third determining module 602 is further configured to determine, based on the first uplink channel information and the second uplink channel information, whether a priority of the first target subframe is higher than a priority of the second target subframe.

The third determining module 602 is further configured to: if the priority of the first target subframe is higher than the priority of the second target subframe, determine the first time offset of the first control subframe and the second time offset of the second control subframe, where the first time offset and the second time offset meet a first preset condition, and the first preset condition is that the first start time point of the first control subframe is earlier than the second start time point of the second control subframe, or a time difference between the first start time point of the first control subframe and the second start time point of the second control subframe is greater than a time difference threshold; or
the third determining module 602 is further configured to: if the priority of the first target subframe is lower than the priority of the second target subframe, determine the first time offset of the first control subframe and the second time offset of the second control subframe, where the first time offset and the second time offset meet a second preset condition, and the second preset condition is that the second start time point of the second control subframe is earlier than the first start time point of the first control subframe, or a time difference between the first start time point of the first control subframe and the second start time point of the second control subframe is not greater than a time difference threshold.

In this example of this disclosure, the base station configures the first time offset and the second time offset for the UE, and the UE determines the first start time point of the first control subframe and the second start time point of the second control subframe based on the first time offset and the second time offset, so that a power allocation priority of the UE can be flexibly configured in different scenarios, and power utilization is maximally improved.

It should be noted that, when the power allocation apparatus provided in the foregoing example performs power allocation, division of the foregoing function modules is merely used as an example for description. In actual application, the foregoing functions may be allocated to different function modules and implemented according to a requirement, that is, an inner structure of the apparatus is divided into different function modules to implement all or some of the functions described above. In addition, the power allocation apparatus provided in the foregoing examples and the power allocation method examples belong to a same idea. For details about a specific implementation process of the power allocation apparatus, refer to the method examples. Details are not described herein again.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of this disclosure, but are not intended to limit this disclosure. Any modification, or improvement made without departing from principle of this disclosure shall fall within the protection scope of this disclosure.

## Claims

1. A power allocation method, wherein the method comprises:
determining (301), by user equipment UE, a first start time point of a first control subframe and a second start time point of a second control subframe, wherein the first control subframe is used to transmit control information of a first target subframe, the second control subframe is used to transmit control information of a second target subframe, a transmission time of the second target subframe overlaps with a transmission time of the first target subframe, the second target subframe and the first target subframe have different subframe lengths, and the second target subframe and the first target subframe belong to different base stations or different cell groups;
determining (302), by the UE based on the first start time point and the second start time point, whether a priority of the first target subframe is higher than a priority of the second target subframe, and determining first uplink channel information on the first target subframe and second uplink channel information on the second target subframe; and
if the priority of the first target subframe is higher than the priority of the second target subframe, allocating (303), by the UE based on the first uplink channel information and the second uplink channel information, power to the UE in a base station or a cell group in which the first target subframe is located, and allocating reserved power of the UE to the UE in a base station or a cell group in which the second target subframe is located; or
if the priority of the first target subframe is lower than the priority of the second target subframe, allocating (304), by the UE based on the first uplink channel information and the second uplink channel information, power to the UE in a base station or a cell group in which the second target subframe is located, and allocating reserved power of the UE to the UE in a base station or a cell group in which the first target subframe is located.

2. The method according to claim 1, wherein the determining (302), by the UE based on the first start time point and the second start time point, whether a priority of the first target subframe is higher than a priority of the second target subframe comprises:
if the first start time point is earlier than the second start time point, determining, by the UE, that the priority of the first target subframe is higher than the priority of the second target subframe; or
if the second start time point is earlier than the first start time point, determining, by the UE, that the priority of the first target subframe is lower than the priority of the second target subframe.

3. The method according to claim 1, wherein the determining (302), by the UE based on the first start time point and the second start time point, whether a priority of the first target subframe is higher than a priority of the second target subframe comprises:
calculating, by the UE, a time difference between the first start time point and the second start time point; and
determining, by the UE based on the time difference and a time difference threshold, whether the priority of the first target subframe is higher than the priority of the second target subframe.

4. The method according to claim 3, wherein the determining (302), by the UE based on the time difference and a time difference threshold, whether the priority of the first target subframe is higher than the priority of the second target subframe comprises:
if the time difference is greater than the time difference threshold, determining, by the UE, that the priority of the first target subframe is higher than the priority of the second target subframe; or
if the time difference is not greater than the time difference threshold, determining, by the UE, that the priority of the first target subframe is lower than the priority of the second target subframe.

5. The method according to claim 1, wherein the determining (301), by UE, a first start time point of a first control subframe and a second start time point of a second control subframe comprises:
obtaining, by the UE, a first time offset of the first control subframe and a second time offset of the second control subframe; and
determining, by the UE, the first start time point of the first control subframe and the second start time point of the second control subframe based on the first time offset and the second time offset.

6. The method according to claim 1, wherein the allocating (301), by the UE based on the first uplink channel information and the second uplink channel information, power to the UE in a base station or a cell group in which the first target subframe is located comprises:
when an uplink channel of the first target subframe comprises a physical random access channel PRACH, calculating, by the UE, first guaranteed power of the uplink channel of the first target subframe based on the first uplink channel information and the second uplink channel information, wherein the first guaranteed power is power configured, by using higher layer signaling, for the UE in the base station or the cell group in which the first target subframe is located; and
allocating, by the UE based on the first guaranteed power and first required power of the uplink channel of the first target subframe, the power to the UE in the base station or the cell group in which the first target subframe is located.

7. The method according to claim 6, wherein the calculating, by the UE, first guaranteed power of the uplink channel of the first target subframe based on the first uplink channel information and the second uplink channel information comprises:
calculating, by the UE, the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

8. A power allocation apparatus, wherein the apparatus comprises:
a first determining module (501), configured to determine a first start time point of a first control subframe and a second start time point of a second control subframe, wherein the first control subframe is used to transmit control information of a first target subframe, the second control subframe is used to transmit control information of a second target subframe, a transmission time of the second target subframe overlaps with a transmission time of the first target subframe, the second target subframe and the first target subframe have different subframe lengths, and the second target subframe and the first target subframe belong to different base stations or different cell groups;
a second determining module (502), configured to:
determine, based on the first start time point and the second start time point, whether a priority of the first target subframe is higher than a priority of the second target subframe, and determine first uplink channel information on the first target subframe and second uplink channel information on the second target subframe;
a first allocation module (503), configured to:
if the priority of the first target subframe is higher than the priority of the second target subframe, allocate, based on the first uplink channel information and the second uplink channel information, power to the UE in a base station or a cell group in which the first target subframe is located, and allocate reserved power of the UE to the UE in a base station or a cell group in which the second target subframe is located; and
a second allocation module (504), configured to:
if the priority of the first target subframe is lower than the priority of the second target subframe, allocate, based on the first uplink channel information and the second uplink channel information, power to the UE in a base station or a cell group in which the second target subframe is located, and allocate reserved power of the UE to the UE in a base station or a cell group in which the first target subframe is located.

9. The apparatus according to claim 8, wherein
the second determining module (502) is further configured to:
if the first start time point is earlier than the second start time point, determine that the priority of the first target subframe is higher than the priority of the second target subframe; or
the second determining module (502) is further configured to:
if the second start time point is earlier than the first start time point, determine that the priority of the first target subframe is lower than the priority of the second target subframe.

10. The apparatus according to claim 8, wherein
the second determining module (502) is further configured to:
calculate a time difference between the first start time point and the second start time point, and determine, based on the time difference and a time difference threshold, whether the priority of the first target subframe is higher than the priority of the second target subframe.

11. The apparatus according to claim 10, wherein
the second determining module (502) is further configured to:
if the time difference is greater than the time difference threshold, determine that the priority of the first target subframe is higher than the priority of the second target subframe; or
the second determining module (502) is further configured to:
if the time difference is not greater than the time difference threshold, determine that the priority of the first target subframe is lower than the priority of the second target subframe.

12. The apparatus according to claim 8, wherein
the first determining module (501) is further configured to:
obtain a first time offset of the first control subframe and a second time offset of the second control subframe, and determine the first start time point of the first control subframe and the second start time point of the second control subframe based on the first time offset and the second time offset.

13. The apparatus according to claim 8, wherein
the first allocation module (503) is further configured to:
when an uplink channel of the first target subframe comprises a physical random access channel PRACH, calculate first guaranteed power of the uplink channel of the first target subframe based on the first uplink channel information and the second uplink channel information, wherein the first guaranteed power is power configured, by using higher layer signaling, for the UE in the base station or the cell group in which the first target subframe is located; and
allocate, based on the first guaranteed power and first required power of the uplink channel of the first target subframe, the power to the UE in the base station or the cell group in which the first target subframe is located.

14. The apparatus according to claim 13, wherein
the first allocation module (503) is further configured to calculate the first guaranteed power of the uplink channel of the first target subframe based on a reserved power factor of uplink data transmission in the base station or the cell group in which the second target subframe is located, transmit power of a data channel and a PRACH of the second target subframe, transmit power of the PRACH of the first target subframe, and maximum transmit power at a time point at which the transmission time of the first target subframe overlaps with the transmission time of the second target subframe.

15. A computer storage medium, wherein the storage medium stores a computer program, and the computer program implements the following steps when executed by a processor:
determining (301) a first start time point of a first control subframe and a second start time point of a second control subframe, wherein the first control subframe is used to transmit control information of a first target subframe, the second control subframe is used to transmit control information of a second target subframe, a transmission time of the second target subframe overlaps with a transmission time of the first target subframe, the second target subframe and the first target subframe have different subframe lengths, and the second target subframe and the first target subframe belong to different base stations or different cell groups;
determining (302), based on the first start time point and the second start time point, whether a priority of the first target subframe is higher than a priority of the second target subframe, and determining first uplink channel information on the first target subframe and second uplink channel information on the second target subframe; and
if the priority of the first target subframe is higher than the priority of the second target subframe, allocating (303), based on the first uplink channel information and the second uplink channel information, power to user equipment UE in a base station or a cell group in which the first target subframe is located, and allocating reserved power of the UE to the UE in a base station or a cell group in which the second target subframe is located; or if the priority of the first target subframe is lower than the priority of the second target subframe, allocating (304), based on the first uplink channel information and the second uplink channel information, power to the UE in a base station or a cell group in which the second target subframe is located, and allocating reserved power of the UE to the UE in a base station or a cell group in which the first target subframe is located.

## Patentansprüche

1. Leistungszuweisungsverfahren, wobei das Verfahren Folgendes umfasst:
Bestimmen (301), durch die Benutzerausrüstung UE, eines ersten Startzeitpunkts eines ersten Steuerteilrahmens und eines zweiten Startzeitpunkts eines zweiten Steuerteilrahmens, wobei der erste Steuerteilrahmen verwendet wird, um Steuerinformationen eines ersten Zielteilrahmens zu übertragen, wobei der zweite Steuerteilrahmen verwendet wird, um Steuerinformationen eines zweiten Zielteilrahmens zu übertragen, wobei sich eine Übertragungszeit des zweiten Zielteilrahmens mit einer Übertragungszeit des ersten Zielteilrahmens überlappt, wobei der zweite Zielteilrahmen und der erste Zielteilrahmen unterschiedliche Teilrahmenlängen aufweisen und der zweite Zielteilrahmen und der erste Zielteilrahmen zu unterschiedlichen Basisstationen oder unterschiedlichen Zellgruppen gehören;
Bestimmen (302), durch die UE basierend auf dem ersten Startzeitpunkt und dem zweiten Startzeitpunkt, ob eine Priorität des ersten Zielteilrahmens höher ist als eine Priorität des zweiten Zielteilrahmens, und Bestimmen von ersten Uplink-Kanalinformationen an dem ersten Zielteilrahmen und zweiten Uplink-Kanalinformationen an dem zweiten Zielteilrahmen; und
wenn die Priorität des ersten Zielteilrahmens höher ist als die Priorität des zweiten Zielteilrahmens, Zuweisen (303), durch die UE basierend auf den ersten Uplink-Kanalinformationen und den zweiten Uplink-Kanalinformationen, von Leistung an die UE in einer Basisstation oder einer Zellgruppe, in der sich der erste Zielteilrahmen befindet, und Zuweisen von reservierter Leistung der UE an die UE in einer Basisstation oder einer Zellgruppe, in der sich der zweite Zielteilrahmen befindet; oder
wenn die Priorität des ersten Zielteilrahmens niedriger ist als die Priorität des zweiten Zielteilrahmens, Zuweisen (304), durch die UE basierend auf den ersten Uplink-Kanalinformationen und den zweiten Uplink-Kanalinformationen, von Leistung an die UE in einer Basisstation oder einer Zellgruppe, in der sich der zweite Zielteilrahmen befindet, und Zuweisen von reservierter Leistung der UE an die UE in einer Basisstation oder einer Zellgruppe, in der sich der erste Zielteilrahmen befindet.

2. Verfahren nach Anspruch 1, wobei das Bestimmen (302), durch die UE basierend auf dem ersten Startzeitpunkt und dem zweiten Startzeitpunkt, ob eine Priorität des ersten Zielteilrahmens höher ist als eine Priorität des zweiten Zielteilrahmens, Folgendes umfasst:
wenn der erste Startzeitpunkt vor dem zweiten Startzeitpunkt liegt, Bestimmen, durch die UE, dass die Priorität des ersten Zielteilrahmens höher ist als die Priorität des zweiten Zielteilrahmens; oder
wenn der zweite Startzeitpunkt vor dem ersten Startzeitpunkt liegt, Bestimmen, durch die UE, dass die Priorität des ersten Zielteilrahmens niedriger ist als die Priorität des zweiten Zielteilrahmens.

3. Verfahren nach Anspruch 1, wobei das Bestimmen (302), durch die UE basierend auf dem ersten Startzeitpunkt und dem zweiten Startzeitpunkt, ob eine Priorität des ersten Zielteilrahmens höher ist als eine Priorität des zweiten Zielteilrahmens, Folgendes umfasst:
Berechnen, durch die UE, eines Zeitunterschieds zwischen dem ersten Startzeitpunkt und dem zweiten Startzeitpunkt; und Bestimmen, durch die UE basierend auf dem Zeitunterschied und einem Zeitunterschiedsschwellenwert, ob die Priorität des ersten Zielteilrahmens höher ist als die Priorität des zweiten Zielteilrahmens.

4. Verfahren nach Anspruch 3, wobei das Bestimmen (302), durch die UE basierend auf dem Zeitunterschied und einem Zeitunterschiedsschwellenwert, ob die Priorität des ersten Zielteilrahmens höher ist als die Priorität des zweiten Zielteilrahmens, Folgendes umfasst:
wenn der Zeitunterschied größer ist als der Zeitunterschiedsschwellenwert, Bestimmen, durch die UE, dass die Priorität des ersten Zielteilrahmens höher ist als die Priorität des zweiten Zielteilrahmens; oder
wenn der Zeitunterschied nicht größer ist als der Zeitunterschiedsschwellenwert, Bestimmen, durch die UE, dass die Priorität des ersten Zielteilrahmens niedriger ist als die Priorität des zweiten Zielteilrahmens.

5. Verfahren nach Anspruch 1, wobei das Bestimmen (301), durch die UE, eines ersten Startzeitpunkts eines ersten Steuerteilrahmens und eines zweiten Startzeitpunkts eines zweiten Steuerteilrahmens Folgendes umfasst:
Erhalten, durch die UE, eines ersten Zeitversatzes des ersten Steuerteilrahmens und eines zweiten Zeitversatzes des zweiten Steuerteilrahmens; und
Bestimmen, durch die UE, des ersten Startzeitpunkts des ersten Steuerteilrahmens und des zweiten Startzeitpunkts des zweiten Steuerteilrahmens basierend auf dem ersten Zeitversatz und dem zweiten Zeitversatz.

6. Verfahren nach Anspruch 1, wobei das Zuweisen (301), durch die UE basierend auf den ersten Uplink-Kanalinformationen und den zweiten Uplink-Kanalinformationen, von Leistung an die UE in einer Basisstation oder einer Zellgruppe, in der sich der erste Zielteilrahmen befindet, Folgendes umfasst:
wenn ein Uplink-Kanal des ersten Zielteilrahmens einen physischen Direktzugriffskanal PRACH umfasst, Berechnen, durch die UE, einer ersten garantierten Leistung des Uplink-Kanals des ersten Zielteilrahmens basierend auf den ersten Uplink-Kanalinformationen und den zweiten Uplink-Kanalinformationen, wobei die erste garantierte Leistung Leistung ist, die durch Verwenden einer Signalisierung einer höheren Schicht für die UE in der Basisstation oder der Zellgruppe, in der sich der erste Zielteilrahmen befindet, konfiguriert ist; und
Zuweisen, durch die UE basierend auf der ersten garantierten Leistung und der ersten erforderlichen Leistung des Uplink-Kanals des ersten Zielteilrahmens, der Leistung an die UE in der Basisstation oder der Zellgruppe, in der sich der erste Zielteilrahmen befindet.

7. Verfahren nach Anspruch 6, wobei das Berechnen, durch die UE, der ersten garantierten Leistung des Uplink-Kanals des ersten Zielteilrahmens basierend auf den ersten Uplink-Kanalinformationen und den zweiten Uplink-Kanalinformationen Folgendes umfasst:
Berechnen, durch die UE, der ersten garantierten Leistung des Uplink-Kanals des ersten Zielteilrahmens basierend auf einem Faktor der reservierten Leistung der Uplink-Datenübertragung in der Basisstation oder der Zellgruppe, in der sich der zweite Zielteilrahmen befindet, Übertragen von Leistung eines Datenkanals und eines PRACH des zweiten Zielteilrahmens, Übertragen von Leistung des PRACH des ersten Zielteilrahmens und maximales Übertragen von Leistung zu einem Zeitpunkt, zu dem sich die Übertragungszeit des ersten Zielteilrahmens mit der Übertragungszeit des zweiten Zielteilrahmens überlappt.

8. Leistungszuweisungsvorrichtung, wobei die Vorrichtung Folgendes umfasst:
ein erstes Bestimmungsmodul (501), das dazu konfiguriert ist, einen ersten Startzeitpunkt eines ersten Steuerteilrahmens und einen zweiten Startzeitpunkt eines zweiten Steuerteilrahmens zu bestimmen, wobei der erste Steuerteilrahmen verwendet wird, um Steuerinformationen eines ersten Zielteilrahmens zu übertragen, wobei der zweite Steuerteilrahmen verwendet wird, um Steuerinformationen eines zweiten Zielteilrahmens zu übertragen, wobei sich eine Übertragungszeit des zweiten Zielteilrahmens mit einer Übertragungszeit des ersten Zielteilrahmens überlappt, wobei der zweite Zielteilrahmen und der erste Zielteilrahmen unterschiedliche Teilrahmenlängen aufweisen und der zweite Zielteilrahmen und der erste Zielteilrahmen zu unterschiedlichen Basisstationen oder unterschiedlichen Zellgruppen gehören;
ein zweites Bestimmungsmodul (502), das zu Folgendem konfiguriert ist:
Bestimmen, basierend auf dem ersten Startzeitpunkt und dem zweiten Startzeitpunkt, ob eine Priorität des ersten Zielteilrahmens höher ist als eine Priorität des zweiten Zielteilrahmens, und Bestimmen von ersten Uplink-Kanalinformationen an dem ersten Zielteilrahmen und zweiten Uplink-Kanalinformationen an dem zweiten Zielteilrahmen;
ein erstes Zuweisungsmodul (503), das zu Folgendem konfiguriert ist:
wenn die Priorität des ersten Zielteilrahmens höher ist als die Priorität des zweiten Zielteilrahmens, Zuweisen, basierend auf den ersten Uplink-Kanalinformationen und den zweiten Uplink-Kanalinformationen, von Leistung an die UE in einer Basisstation oder einer Zellgruppe, in der sich der erste Zielteilrahmen befindet, und Zuweisen von reservierter Leistung der UE an die UE in einer Basisstation oder einer Zellgruppe, in der sich der zweite Zielteilrahmen befindet; und
ein zweites Zuweisungsmodul (504), das zu Folgendem konfiguriert ist:
wenn die Priorität des ersten Zielteilrahmens niedriger ist als die Priorität des zweiten Zielteilrahmens, Zuweisen, basierend auf den ersten Uplink-Kanalinformationen und den zweiten Uplink-Kanalinformationen, von Leistung an die UE in einer Basisstation oder einer Zellgruppe, in der sich der zweite Zielteilrahmen befindet, und Zuweisen von reservierter Leistung der UE an die UE in einer Basisstation oder einer Zellgruppe, in der sich der erste Zielteilrahmen befindet.

9. Vorrichtung nach Anspruch 8, wobei
das zweite Bestimmungsmodul (502) ferner zu Folgendem konfiguriert ist:
wenn der erste Startzeitpunkt vor dem zweiten Startzeitpunkt liegt, Bestimmen, dass die Priorität des ersten Zielteilrahmens höher ist als die Priorität des zweiten Zielteilrahmens; oder
das zweite Bestimmungsmodul (502) ferner zu Folgendem konfiguriert ist:
wenn der zweite Startzeitpunkt vor dem ersten Startzeitpunkt liegt, Bestimmen, dass die Priorität des ersten Zielteilrahmens niedriger ist als die Priorität des zweiten Zielteilrahmens.

10. Vorrichtung nach Anspruch 8, wobei
das zweite Bestimmungsmodul (502) ferner zu Folgendem konfiguriert ist:
Berechnen eines Zeitunterschieds zwischen dem ersten Startzeitpunkt und dem zweiten Startzeitpunkt und Bestimmen, basierend auf dem Zeitunterschied und einem Zeitunterschiedsschwellenwert, ob die Priorität des ersten Zielteilrahmens höher ist als die Priorität des zweiten Zielteilrahmens.

11. Vorrichtung nach Anspruch 10, wobei
das zweite Bestimmungsmodul (502) ferner zu Folgendem konfiguriert ist:
wenn der Zeitunterschied größer ist als der Zeitunterschiedsschwellenwert, Bestimmen, dass die Priorität des ersten Zielteilrahmens höher ist als die Priorität des zweiten Zielteilrahmens; oder
das zweite Bestimmungsmodul (502) ferner zu Folgendem konfiguriert ist:
wenn der Zeitunterschied nicht größer ist als der Zeitunterschiedsschwellenwert, Bestimmen, dass die Priorität des ersten Zielteilrahmens niedriger ist als die Priorität des zweiten Zielteilrahmens.

12. Vorrichtung nach Anspruch 8, wobei
das erste Bestimmungsmodul (501) ferner zu Folgendem konfiguriert ist:
Erhalten eines ersten Zeitversatzes des ersten Steuerteilrahmens und eines zweiten Zeitversatzes des zweiten Steuerteilrahmens und Bestimmen des ersten Startzeitpunkts des ersten Steuerteilrahmens und des zweiten Startzeitpunkts des zweiten Steuerteilrahmens basierend auf dem ersten Zeitversatz und dem zweiten Zeitversatz.

13. Vorrichtung nach Anspruch 8, wobei
das erste Zuweisungsmodul (503) ferner zu Folgendem konfiguriert ist:
wenn ein Uplink-Kanal des ersten Zielteilrahmens einen physischen Direktzugriffskanal PRACH umfasst, Berechnen einer ersten garantierten Leistung des Uplink-Kanals des ersten Zielteilrahmens basierend auf den ersten Uplink-Kanalinformationen und den zweiten Uplink-Kanalinformationen, wobei die erste garantierte Leistung Leistung ist, die durch Verwenden einer Signalisierung einer höheren Schicht für die UE in der Basisstation oder der Zellgruppe, in der sich der erste Zielteilrahmen befindet, konfiguriert ist; und
Zuweisen, basierend auf der ersten garantierten Leistung und der ersten erforderlichen Leistung des Uplink-Kanals des ersten Zielteilrahmens, der Leistung an die UE in der Basisstation oder der Zellgruppe, in der sich der erste Zielteilrahmen befindet.

14. Vorrichtung nach Anspruch 13, wobei
das erste Zuweisungsmodul (503) ferner dazu konfiguriert ist, die erste garantierte Leistung des Uplink-Kanals des ersten Zielteilrahmens basierend auf einem Faktor der reservierten Leistung der Uplink-Datenübertragung in der Basisstation oder der Zellgruppe, in der sich der zweite Zielteilrahmen befindet, zu berechnen, Leistung eines Datenkanals und eines PRACH des zweiten Zielteilrahmens zu übertragen, Leistung des PRACH des ersten Zielteilrahmens zu übertragen und Leistung zu einem Zeitpunkt, zu dem sich die Übertragungszeit des ersten Zielteilrahmens mit der Übertragungszeit des zweiten Zielteilrahmens überlappt, maximal zu übertragen.

15. Computerspeichermedium, wobei auf dem Speichermedium ein Computerprogramm gespeichert ist und das Computerprogramm die folgenden Schritte umsetzt, wenn es von einem Prozessor ausgeführt wird:
Bestimmen (301) eines ersten Startzeitpunkts eines ersten Steuerteilrahmens und eines zweiten Startzeitpunkts eines zweiten Steuerteilrahmens, wobei der erste Steuerteilrahmen verwendet wird, um Steuerinformationen eines ersten Zielteilrahmens zu übertragen, wobei der zweite Steuerteilrahmen verwendet wird, um Steuerinformationen eines zweiten Zielteilrahmens zu übertragen, wobei sich eine Übertragungszeit des zweiten Zielteilrahmens mit einer Übertragungszeit des ersten Zielteilrahmens überlappt, wobei der zweite Zielteilrahmen und der erste Zielteilrahmen unterschiedliche Teilrahmenlängen aufweisen und der zweite Zielteilrahmen und der erste Zielteilrahmen zu unterschiedlichen Basisstationen oder unterschiedlichen Zellgruppen gehören;
Bestimmen (302), basierend auf dem ersten Startzeitpunkt und dem zweiten Startzeitpunkt, ob eine Priorität des ersten Zielteilrahmens höher ist als eine Priorität des zweiten Zielteilrahmens, und Bestimmen von ersten Uplink-Kanalinformationen an dem ersten Zielteilrahmen und zweiten Uplink-Kanalinformationen an dem zweiten Zielteilrahmen; und wenn die Priorität des ersten Zielteilrahmens höher ist als die Priorität des zweiten Zielteilrahmens, Zuweisen (303), basierend auf den ersten Uplink-Kanalinformationen und den zweiten Uplink-Kanalinformationen, von Leistung an die Benutzerausrüstung UE in einer Basisstation oder einer Zellgruppe, in der sich der erste Zielteilrahmen befindet, und Zuweisen von reservierter Leistung der UE an die UE in einer Basisstation oder einer Zellgruppe, in der sich der zweite Zielteilrahmen befindet; oder
wenn die Priorität des ersten Zielteilrahmens niedriger ist als die Priorität des zweiten Zielteilrahmens, Zuweisen (304), basierend auf den ersten Uplink-Kanalinformationen und den zweiten Uplink-Kanalinformationen, von Leistung an die UE in einer Basisstation oder einer Zellgruppe, in der sich der zweite Zielteilrahmen befindet, und Zuweisen von reservierter Leistung der UE an die UE in einer Basisstation oder einer Zellgruppe, in der sich der erste Zielteilrahmen befindet.

## Revendications

1. Procédé d'attribution de puissance, dans lequel le procédé comprend :
la détermination (301), par un équipement utilisateur UE, d'un premier point temporel de démarrage d'une première sous-trame de commande et d'un second point temporel de démarrage d'une seconde sous-trame de commande, dans lequel la première sous-trame de commande est utilisée pour transmettre des informations de commande d'une première sous-trame cible, la seconde sous-trame de commande est utilisée pour transmettre des informations de commande d'une seconde sous-trame cible, un temps de transmission de la seconde sous-trame cible chevauche un temps de transmission de la première sous-trame cible, la second sous-trame cible et la première sous-trame cible ont différentes longueurs de sous-trame, et la seconde sous-trame cible et la première sous-trame cible appartiennent à différentes stations de base ou différents groupes de cellules ;
la détermination (302), par l'UE sur la base du premier point temporel de démarrage et du second point temporel de démarrage, du fait qu'une priorité de la première sous-trame cible est ou n'est pas plus élevée qu'une priorité de la seconde sous-trame cible, et la détermination de premières informations de canal de liaison montante sur la première sous-trame cible et de secondes informations de canal de liaison montante sur la seconde sous-trame cible ; et
si la priorité de la première sous-trame cible est plus élevée que la priorité de la seconde sous-trame cible, l'attribution (303), par l'UE sur la base des premières informations de canal de liaison montante et des secondes informations de canal de liaison montante, d'une puissance à l'UE dans une station de base ou un groupe de cellules où se trouve la première sous-trame cible, et l'attribution d'une puissance réservée de l'UE à l'UE dans une station de base ou un groupe de cellules où se trouve la seconde sous-trame cible ; ou
si la priorité de la première sous-trame cible est plus basse que la priorité de la seconde sous-trame cible, l'attribution (304), par l'UE sur la base des premières informations de canal de liaison montante et des secondes informations de canal de liaison montante, d'une puissance à l'UE dans une station de base ou un groupe de cellules où se trouve la seconde sous-trame cible, et l'attribution d'une puissance réservée de l'UE à l'UE dans une station de base ou un groupe de cellules où se trouve la première sous-trame cible.

2. Procédé selon la revendication 1, dans lequel la détermination (302), par l'UE sur la base du premier point temporel de démarrage et du second point temporel de démarrage, du fait qu'une priorité de la première sous-trame cible est ou n'est pas plus élevée qu'une priorité de la second sous-trame cible comprend :
si le premier point temporel de démarrage survient plus tôt que le second point temporel de démarrage, la détermination, par l'UE, que la priorité de la première sous-trame cible est plus élevée que la priorité de la seconde sous-trame ; ou
si le second point temporel de démarrage survient plus tôt que le premier point temporel de démarrage, la détermination, par l'UE, que la priorité de la première sous-trame cible est plus basse que la priorité de la seconde sous-trame cible.

3. Procédé selon la revendication 1, dans lequel la détermination (302), par l'UE sur la base du premier point temporel de démarrage et du second point temporel de démarrage, du fait qu'une priorité de la première sous-trame cible est ou n'est pas plus élevée qu'une priorité de la seconde sous-trame cible comprend :
le calcul, par l'UE, d'une différence temporelle entre le premier point temporel de démarrage et le second point temporel de démarrage ; et
la détermination, par l'UE sur la base de la différence temporelle et d'un seuil de différence temporelle, du fait que la priorité de la première sous-trame cible est ou n'est pas plus élevée que la priorité de la seconde sous-trame cible.

4. Procédé selon la revendication 3, dans lequel la détermination (302), par l'UE sur la base de la différence temporelle et d'un seuil de différence temporelle, du fait que la priorité de la première sous-trame cible est ou n'est pas plus élevée que la priorité de la seconde sous-trame cible comprend :
si la différence temporelle est plus élevée que le seuil de différence temporelle, la détermination, par l'UE, que la priorité de la première sous-trame cible est plus élevée que la priorité de la seconde sous-trame cible ; ou
si la différence temporelle n'est pas supérieure au seuil de différence temporelle, la détermination, par l'UE, que la priorité de la première sous-trame cible est plus basse que la priorité de la seconde sous-trame cible.

5. Procédé selon la revendication 1, dans lequel la détermination (301), par l'UE, d'un premier point temporel de démarrage d'une première sous-trame de commande et d'un second point temporel de démarrage d'une seconde sous-trame de commande comprend :
l'obtention, par l'UE, d'un premier décalage temporel de la première sous-trame de commande et d'un second décalage temporel de la seconde sous-trame de commande ; et
la détermination, par l'UE, du premier point temporel de démarrage de la première sous-trame de commande et du second point temporel de démarrage de la seconde sous-trame de commande sur la base du premier décalage temporel et du second décalage temporel.

6. Procédé selon la revendication 1, dans lequel l'attribution (301), par l'UE sur la base des premières informations de canal de liaison montante et des secondes informations de canal de liaison montante, d'une puissance à l'UE dans une station de base ou un groupe de cellules où se trouve la première sous-trame cible comprend :
lorsqu'un canal de liaison montante de la première sous-trame cible comprend un canal physique d'accès aléatoire PRACH, le calcul, par l'UE, d'une première puissance garantie du canal de liaison montante de la première sous-trame cible sur la base des premières informations de canal de liaison montante et des secondes informations de canal de liaison montante, dans lequel la première puissance garantie est une puissance configurée, en utilisant une signalisation de couche supérieure, pour l'UE dans la station de base ou le groupe de cellules où se trouve la première sous-trame cible ; et
l'attribution, par l'UE sur la base de la première puissance garantie et de la première puissance requise du canal de liaison montante de la première sous-trame cible, de la puissance à l'UE dans la station de base ou le groupe de cellules où se trouve la première sous-trame cible.

7. Procédé selon la revendication 6, dans lequel le calcul, par l'UE, d'une première puissance garantie du canal de liaison montante de la première sous-trame cible sur la base des premières informations de canal de liaison montante et des secondes informations de canal de liaison montante comprend :
le calcul, par l'UE, de la première puissance garantie du canal de liaison montante de la première sous-trame cible sur la base d'un facteur de puissance réservée de transmission de données de liaison montante dans la station de base ou le groupe de cellules où se trouve la seconde sous-trame cible, d'une puissance de transmission d'un canal de données et d'un PRACH de la seconde sous-trame cible, d'une puissance de transmission du PRACH de la première sous-trame cible, et d'une puissance de transmission maximale à un point temporel auquel le temps de transmission de la première sous-trame cible chevauche le temps de transmission de la seconde sous-trame cible.

8. Appareil d'attribution de puissance, dans lequel l'appareil comprend :
un premier module de détermination (501), configuré pour déterminer un premier point temporel de démarrage d'une première sous-trame de commande et un second point temporel de démarrage d'une seconde sous-trame de commande, dans lequel la première sous-trame de commande est utilisée pour transmettre des informations de commande d'une première sous-trame cible, la seconde sous-trame de commande est utilisée pour transmettre des informations de commande d'une seconde sous-trame cible, un temps de transmission de la seconde sous-trame cible chevauche un temps de transmission de la première sous-trame cible, la seconde sous-trame cible et la première sous-trame cible ont différentes longueurs de sous-trame, et la seconde sous-trame cible et la première sous-trame cible appartiennent à différentes stations de base ou différents groupes de cellules ;
un second module de détermination (502), configuré pour :
déterminer, sur la base du premier point temporel de démarrage et du second point temporel de démarrage, si une priorité de la première sous-trame cible est ou n'est pas plus élevée qu'une priorité de la seconde sous-trame cible, et déterminer des premières informations de canal de liaison montante sur la première sous-trame cible et des secondes informations de canal de liaison montante sur la seconde sous-trame cible ;
un premier module d'attribution (503) configuré pour :
si la priorité de la première sous-trame cible est plus élevée que la priorité de la seconde sous-trame cible, attribuer, sur la base des première informations de canal de liaison montante et des secondes informations de canal de liaison montante, une puissance à l'UE dans une station de base ou un groupe de cellules où se trouve la première sous-trame cible, et attribuer une puissance réservée de l'UE à l'UE dans une station de base ou un groupe de cellules où se trouve la seconde sous-trame cible ; et
un second module d'attribution (504), configuré pour :
si la priorité de la première sous-trame cible est plus basse que la priorité de la seconde sous-trame cible, attribuer, sur la base des premières informations de canal de liaison montante et des secondes informations de canal de liaison montante, une puissance à l'UE dans une station de base ou un groupe de cellules où se trouve la seconde sous-trame cible, et attribuer une puissance réservée de l'UE à l'UE dans une station de base ou un groupe de cellules où se trouve la première sous-trame cible.

9. Appareil selon la revendication 8, dans lequel le second module de détermination (502) est en outre configuré pour :
si le premier point temporel de démarrage survient plus tôt que le second point temporel de démarrage, déterminer que la priorité de la première sous-trame cible est plus élevée que la seconde sous-trame cible ; ou
le second module de détermination (502) est en outre configuré pour :
si le second point temporel de démarrage survient plus tôt que le premier point temporel de démarrage, déterminer que la priorité de la première sous-trame cible est plus basse que la priorité de la seconde sous-trame cible.

10. Appareil selon la revendication 8, dans lequel le second module de détermination (502) est en outre configuré pour :
calculer une différence temporelle entre le premier point temporel de démarrage et le second point temporel de démarrage, et déterminer, sur la base de la différence temporelle et d'un seuil de différence temporelle, si la priorité de la première sous-trame cible est ou n'est pas plus élevée que la priorité de la seconde sous-trame cible.

11. Appareil selon la revendication 10, dans lequel le second module de détermination (502) est en outre configuré pour :
si la différence temporelle est supérieure au seuil de différence temporelle, déterminer que la priorité de la première sous-trame cible est plus élevée que la priorité de la seconde sous-trame cible ; ou
le second module de détermination (502) est en outre configuré pour :
si la différence temporelle n'est pas supérieure au seuil de différence temporelle, déterminer que la priorité de la première sous-trame cible est plus basse que la priorité de la seconde sous-trame cible.

12. Appareil selon la revendication 8, dans lequel le premier module de détermination (501) est en outre configuré pour :
obtenir un premier décalage temporel de la première sous-trame de commande et un second décalage temporel de la seconde sous-trame de commande, et déterminer le premier point temporel de démarrage de la première sous-trame de commande et le second point temporel de démarrage de la seconde sous-trame de commande sur la base du premier décalage temporel et du second décalage temporel.

13. Appareil selon la revendication 8, dans lequel le premier module d'attribution (503) est en outre configuré pour :
lorsqu'un canal de liaison montante de la première sous-trame cible comprend un canal physique d'accès aléatoire PRACH, calculer une première puissance garantie du canal de liaison montante de la première sous-trame cible sur la base des premières informations de canal de liaison montante et des secondes informations de canal de liaison montante, dans lequel la première puissance garantie est une puissance configurée, en utilisant une signalisation de couche supérieure, pour l'UE dans la station de base ou le groupe de cellules où se trouve la première sous-trame cible ; et
attribuer, sur la base de la première puissance garantie et de la première puissance requise du canal de liaison montante de la première sous-trame cible, la puissance à l'UE dans la station de base ou le groupe de cellules où se trouve la première sous-trame cible.

14. Appareil selon la revendication 13, dans lequel le premier module d'attribution (503) est en outre configuré pour calculer la première puissance garantie du canal de liaison montante de la première sous-trame cible sur la base d'un facteur de puissance réservée de transmission de données de liaison montante dans la station de base ou le groupe de cellules où se trouve la seconde sous-trame cible, une puissance de transmission d'un canal de données et un PRACH de la seconde sous-trame cible, une puissance de transmission du PRACH de la première sous-trame cible, et une puissance de transmission maximale à un point temporel auquel le temps de transmission de la première sous-trame cible chevauche le temps de transmission de la seconde sous-trame cible.

15. Support de stockage informatique, dans lequel le support de stockage stocke un programme informatique, et le programme informatique met en œuvre les étapes suivantes lorsqu'il est exécuté par une unité de traitement :
la détermination (301) d'un premier point temporel de démarrage d'une première sous-trame de commande et d'un second point temporel de démarrage d'une seconde sous-trame de commande, dans lequel la première sous-trame de commande est utilisée pour transmettre des informations de commande d'une première sous-trame cible, la seconde sous-trame de commande est utilisée pour transmettre des informations de commande d'une seconde sous-trame cible, un temps de transmission de la seconde sous-trame cible chevauche un temps de transmission de la première sous-trame cible, la seconde sous-trame cible et la première sous-trame cible ont différentes longueurs de sous-trame, et la seconde sous-trame cible et la première sous-trame cible appartiennent à appartiennent à différentes stations de base ou différents groupes de cellules ;
la détermination (302), sur la base du premier point temporel de démarrage et du second point temporel de démarrage, du fait qu'une priorité de la première sous-trame cible est ou n'est pas plus élevée qu'une priorité de la seconde sous-trame cible, et la détermination de premières informations de canal de liaison montante sur la première sous-trame cible et de secondes informations de canal de liaison montante sur la seconde sous-trame cible ; et
si la priorité de la première sous-trame cible est plus élevée que la priorité de la seconde sous-trame cible, l'attribution (303), sur la base des premières informations de canal de liaison montante et des secondes informations de canal de liaison montante, d'une puissance à un équipement utilisateur UE dans une station de base ou un groupe de cellules où se trouve la première sous-trame cible, et l'attribution d'une puissance réservée de l'UE à l'UE dans une station de base ou un groupe de cellules où se trouve la seconde sous-trame cible ; ou
si la priorité de la première sous-trame cible est plus basse que la priorité de la seconde sous-trame cible, l'attribution (304), sur la base des premières informations de canal de liaison montante et des secondes informations de canal de liaison montante, d'une puissance à l'UE dans une station de base ou un groupe de cellules où se trouve la seconde sous-trame cible, et l'attribution d'une puissance réservée de l'UE à l'UE dans une station de base ou un groupe de cellules où se trouve la première sous-trame cible.
